# EUROPEAN PATENT APPLICATION

(11) **EP 4 653 643 A1**
(43) Date of publication of application: **26.11.2025**
(21) Application number: 24744720.4
(22) Date of filing: 18.01.2024
(51) Int. Cl.: E04G 21/12, B21F 15/06, B25J 5/00, B25J 5/02, B25J 13/08, E04C 5/16, G05D 1/43, G06T 7/00

(54) **BINDING APPARATUS AND SYSTEM**

(30) Priority: 20.01.2023 JP 2023007172; 20.01.2023 JP 2023007174; 20.01.2023 JP 2023007176; 20.01.2023 JP 2023007177; 20.01.2023 JP 2023007182; 20.01.2023 JP 2023007187; 10.08.2023 JP 2023131219
(71) Applicant: MAX CO., LTD., Tokyo 103-8502 (JP)
(72) Inventor: YAMAMOTO, Yu, Tokyo 103-8502 (JP); TAKAHASHI, Fumitoshi, Tokyo 103-8502 (JP); EBIHARA, Tokichika, Tokyo 103-8502 (JP)
(74) Representative: Samson & Partner Patentanwälte mbB
(86) International application number: PCT/JP2024/001333
(87) International publication number: WO 2024/154800

(57) **Abstract**

One embodiment of the present disclosure provides a binding apparatus that comprises: a reinforcing bar binding unit configured to bind intersecting portions of at least two of a plurality of reinforcing bars; a travel unit configured to be able to travel on the plurality of reinforcing bars; and a travel control unit that controls travelling of the travel unit. The travel control unit controls the travelling of the travel unit on the basis of a map including a plurality of regions including estimated locations of the intersecting portions.

## Description

### TECHNICAL FIELD

The present embodiments relate to a binding apparatus and a system.

### BACKGROUND ART

In recent years, a rebar tying robot has been proposed that automates rebar binding work by autonomously traveling over a plurality of rebars and binding intersection portions where the plurality of rebars intersect with a wire or the like. For example, Patent Literature 1 describes a self-propelled rebar binding machine that receives imaging data from an imaging apparatus, detects presence or absence of an obstacle based on the imaging data, and marks intersection portions where binding is not performed.

### CITATION LIST

### PATENT LITERATURE

Patent Literature 1: JP2020-197072A

### SUMMARY OF INVENTION

### TECHNICAL PROBLEM

Such a robot often estimates its own position based on information from an encoder or the like that measures the number of rotations of a motor provided on a traveling portion. However, since there may be a significant difference between the own position estimated based on information from the encoder or the like and a measurement result obtained by measuring the outside world using a sensor or the like, it was necessary to appropriately correct the estimated own position by, for example, calculation based on this difference. Such a process for correcting the own position may require a large amount of calculation, which may result in a large processing load and operational delays.

The present disclosure is made in consideration of the above-described problem, and an object of the present disclosure is to provide a binding apparatus and a system that are capable of traveling with high accuracy without performing a process of correcting its estimated own position based on a measurement result from a sensor or the like.

### SOLUTION TO PROBLEM

An aspect of the present disclosure provides a binding apparatus including a rebar binding unit configured to bind an intersection point of at least two rebars of a plurality of rebars, a traveling unit configured to be capable of traveling on the plurality of rebars, and a travel control unit configured to control a traveling of the traveling unit, in which the travel control unit is configured to control the traveling of the traveling unit based on a map including a plurality of regions including an estimated position of the intersection point.

### ADVANTAGEOUS EFFECTS OF INVENTION

The present disclosure provides a binding apparatus and a system capable of traveling with high accuracy without performing processing to correct an estimated own position based on a measurement result from a sensor or the like.

### BRIEF DESCRIPTION OF DRAWINGS

[FIG. 1] FIG. 1 is an overall perspective view of a rebar binding robot 100 according to an example of the present disclosure, as viewed obliquely from above.
[FIG. 2] FIG. 2 is an overall perspective view of the rebar binding robot according to the example of the present disclosure, as viewed obliquely from below.
[FIG. 3] FIG. 3 is a plan view of the rebar binding robot 100 as viewed from above (above in a Z-direction).
[FIG. 4] FIG. 4 is a plan view of the rebar binding robot 100 as viewed from below (below in the Z-direction).
[FIG. 5] FIG. 5 is a perspective view of the rebar binding robot 100 with a rebar binding unit 110 removed, as viewed obliquely from above.
[FIG. 6] FIG. 6 is a perspective view of the rebar binding robot 100 with the rebar binding unit 110 removed, as viewed obliquely from above.
[FIG. 7] FIG. 7 is a diagram illustrating a functional block configuration of the rebar binding robot 100.
[FIG. 8] FIG. 8 is a view of the rebar binding robot 100 traveling along a first rebar R10, as viewed from a Y-direction.
[FIG. 9] FIG. 9 is a view of the rebar binding robot 100 traveling along the first rebar R10, as viewed from an X-direction.
[FIG. 10] FIG. 10 is a view of the rebar binding robot 100 that has stopped traveling and is performing binding work, as viewed from the Y-direction.
[FIG. 11] FIG. 11 is a view of the rebar binding robot 100 performing binding work, as viewed from an X-direction.
[FIG. 12] FIG. 12 is a view of the rebar binding robot 100 performing binding work, as viewed from below in the Z-direction.
[FIG. 13A] FIG. 13A illustrates an image taken by a 3D distance camera near an intersection point of the first rebar R10 and a second rebar R20.
[FIG. 13B] FIG. 13B illustrates a schematic image of a vicinity of the intersection point of the first rebar R10 and the second rebar R20.
[FIG. 14A] FIG. 14A is a schematic side view of the rebar binding robot 100 as viewed from a horizontal direction (X-direction).
[FIG. 14B] FIG. 14B is a schematic top view of the rebar binding robot 100 as viewed from above (upper side in the Z-direction).
[FIG. 15] FIG. 15 is a diagram schematically illustrating an image captured by a first sensor 130a.
[FIG. 16] FIG. 16 is a schematic diagram for illustrating template matching.
[FIG. 17] FIG. 17 is a flowchart of a method for controlling travel of the rebar binding robot 100 in the embodiment of the present disclosure.
[FIG. 18A] FIG. 18A is a schematic diagram illustrating an example of an intersection point map 194.
[FIG. 18B] FIG. 18B is a schematic diagram illustrating an example of a travel route.
[FIG. 18C] FIG. 18C is a diagram for illustrating a manner in which the rebar binding robot detects an obstacle.
[FIG. 18D] FIG. 18D is a diagram for illustrating a manner in which the rebar binding robot 100 detects an intersection point.
[FIG. 18E] FIG. 18E is a diagram illustrating a state in which the rebar binding robot 100 has traveled to an intersection point T2 detected by a sensor unit 130.
[FIG. 18F] FIG. 18F is a diagram for illustrating an angle θ between a direction D of the rebar binding robot 100 and a direction of the first rebar R11.
[FIG. 19] FIG. 19 is a schematic diagram of the rebar binding robot 100 illustrating a method for estimating an intersection point.
[FIG. 20] FIG. 20 is a flowchart of a method for estimating an intersection point c12 in the embodiment of the present disclosure.
[FIG. 21] FIG. 21 is a flowchart relating to lateral movement of the rebar binding robot 100.
[FIG. 22A] FIG. 22A is a rear view of the rebar binding robot 100 during lateral movement.
[FIG. 22B] FIG. 22B is a view of the rebar binding robot 100 during lateral movement, as viewed obliquely from above.
[FIG. 23A] FIG. 23A is a rear view of the rebar binding robot 100 during lateral movement.
[FIG. 23B] FIG. 23B is a view of the rebar binding robot 100 during lateral movement, as viewed obliquely from above.
[FIG. 24A] FIG. 24A is a rear view of the rebar binding robot 100 during lateral movement.
[FIG. 24B] FIG. 24B is a view of the rebar binding robot 100 during lateral movement, as viewed obliquely from above.
[FIG. 25A] FIG. 25A is a rear view of the rebar binding robot 100 during lateral movement.
[FIG. 25B] FIG. 25B is a view of the rebar binding robot 100 during lateral movement, as viewed obliquely from above.
[FIG. 26A] FIG. 26A is a rear view of the rebar binding robot 100 during lateral movement.
[FIG. 26B] FIG. 26B is a view of the rebar binding robot 100 during lateral movement, as viewed from diagonally above.
[FIG. 27A] FIG. 27A is a rear view of the rebar binding robot 100 during lateral movement.
[FIG. 27B] FIG. 27B is a view of the rebar binding robot 100 during lateral movement, as viewed obliquely from above.
[FIG. 28] FIG. 28 is a schematic diagram of a rebar binding robot 200 according to another embodiment of the present disclosure, as viewed from below in the Z-direction.

### DESCRIPTION OF EMBODIMENTS

Hereinafter, present embodiments will be described with reference to the accompanying drawings. In order to facilitate understanding of the description, the similar components in each drawing are denoted by the same reference numerals whenever possible, and duplicate descriptions are omitted.

The configuration of a binding apparatus 100 according to an embodiment of the present disclosure will be described below. In the present embodiment, the binding apparatus is a rebar binding apparatus that binds a plurality of rebars arranged to cross each other, and may be, for example, a rebar binding robot. In the following, a case will be described in which the binding apparatus 100 is a rebar binding robot, and the binding apparatus 100 will also be referred to as a rebar binding robot 100. In addition, each drawing may show an X axis, a Y axis, and a Z axis. The X, Y, and Z axes form a right-handed three-dimensional Cartesian coordinate system. Hereinafter, the direction of an X-axis arrow may be referred to as a forward X-axis, +X-direction, right side of an X-direction, or right side of the X axis, and a direction opposite to the arrow may be referred to as a backward X-axis, -X-direction, left side of the X-direction, or left side of the X axis. The same is applied to the other axes. The front side on a Z axis and the rear side on the Z axis may be respectively referred to as the "upper side" or "upper direction" and the "lower side" or "lower direction". Furthermore, a plane perpendicular to the X axis, Y axis, or Z axis may be respectively referred to as a YZ plane, a ZX plane, or an XY plane. However, these directions are used for convenience in describing relative positional relationships. Therefore, these directions do not define absolute positional relationships.

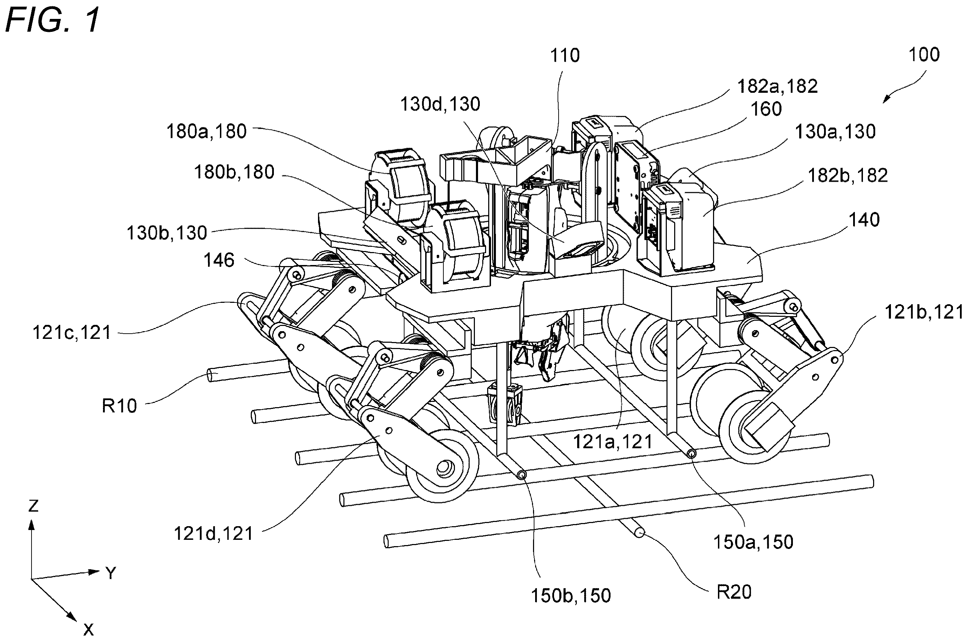

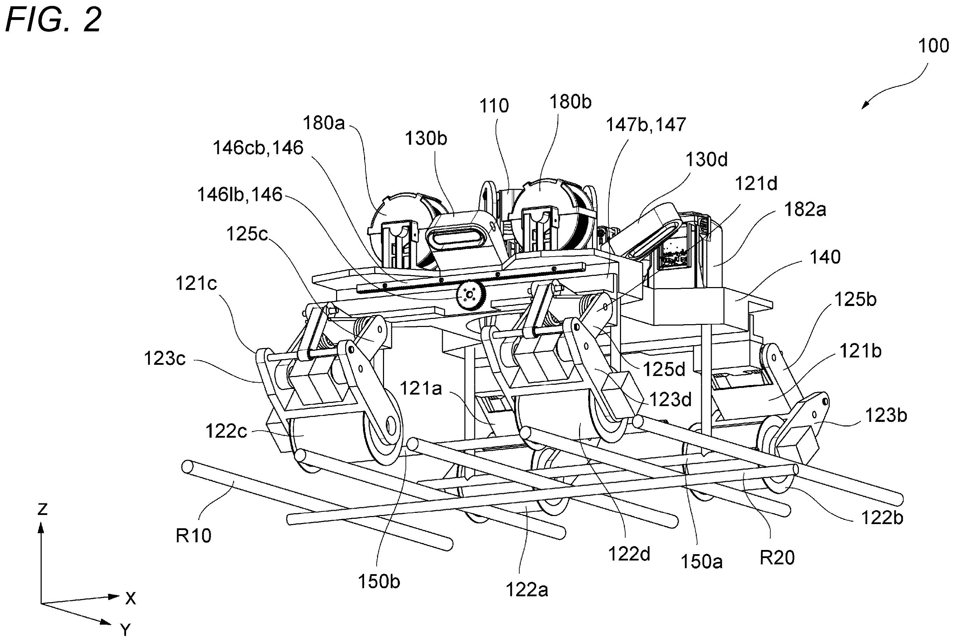

FIG. 1 is an overall perspective view of the rebar binding robot 100 according to the example of the present disclosure, as viewed obliquely from above. FIG. 2 is an overall perspective view of the rebar binding robot 100 according to the example of the present disclosure, as viewed obliquely from below. As illustrated in FIGS. 1 and 2, the rebar binding robot 100 according to the embodiment of the present disclosure includes a rebar binding unit 110, a traveling unit 121, and a sensor unit 130. The rebar binding robot 100 may further include other components, such as a main body unit 140, a support bar 150, a control unit 160, a reel 180 (first reel 180a and second reel 180b), a battery 182 (first battery 182a and second battery 182b), a lateral movement unit 146, and a memory apparatus 198 (not illustrated).

FIGS. 1 and 2 also illustrate a rebar group R including a plurality of rebars R10 (also referred to as "first rebars" or "vertical rebars" in the present embodiment) extending in the Y-direction. As illustrated in FIGS. 1 and 2, the rebar binding robot 100 is disposed on the rebar group R so as to travel along the first rebar R10. In addition to the plurality of rebars R10, the rebar group R may include a plurality of rebars (also referred to as "second rebars R20" or "horizontal rebars" in the present embodiment) extending in the X-direction.

In the embodiment of the present disclosure, the first rebar R10 is arranged so that a first direction, which is a direction in which the first rebar R10 extends, is parallel to the Y-direction. Further, the second rebar R20 is arranged so that a second direction, which is a direction in which the second rebar R20 extends, is parallel to the X-direction. Therefore, in the exemplary embodiment of the present disclosure, the first rebar R10 and the second rebar R20 are arranged so as to be perpendicular to each other. In addition, the first rebar R10 and the second rebar R20 are arranged so that a plane (also referred to as the "rebar plane" in the present embodiment) formed by the first rebar R10 and the second rebar R20 is parallel to the XY plane. Therefore, the plane formed by the first rebar R10 and the second rebar R20 is a horizontal plane in the present embodiment. Furthermore, arrangement of the first rebar R10 and the second rebar R20 is not limited thereto. For example, the first rebar R10 and the second rebar R20 may be arranged so as to be non-perpendicular to each other. For example, the first rebar R10 and the second rebar R20 may be arranged such that an angle between the first rebar R10 and the second rebar R20 is, for example, 30°, 45°, 60°, or other angle. In addition, in the embodiment of the present disclosure, the first rebar R10 and the second rebar R20 are arranged so as to be perpendicular to each other, but for example, depending on a point of intersection, they do not necessarily have to be in a perpendicular relationship, and may be arranged so as to form an angle of, for example, 85° or more and less than 90°.

In addition, the first rebar R10 and the second rebar R20 have a finite length, and a plurality of first rebars R10 or a plurality of second rebars R20 may be connected via joints in a first direction or a second direction. Furthermore, the first rebar R10 and the second rebar R20 may have ends as described below, for example, the first rebar R10 and the second rebar R20 may respectively have ends R10e and R20e described below at one end and the other end in the first direction and the second direction.

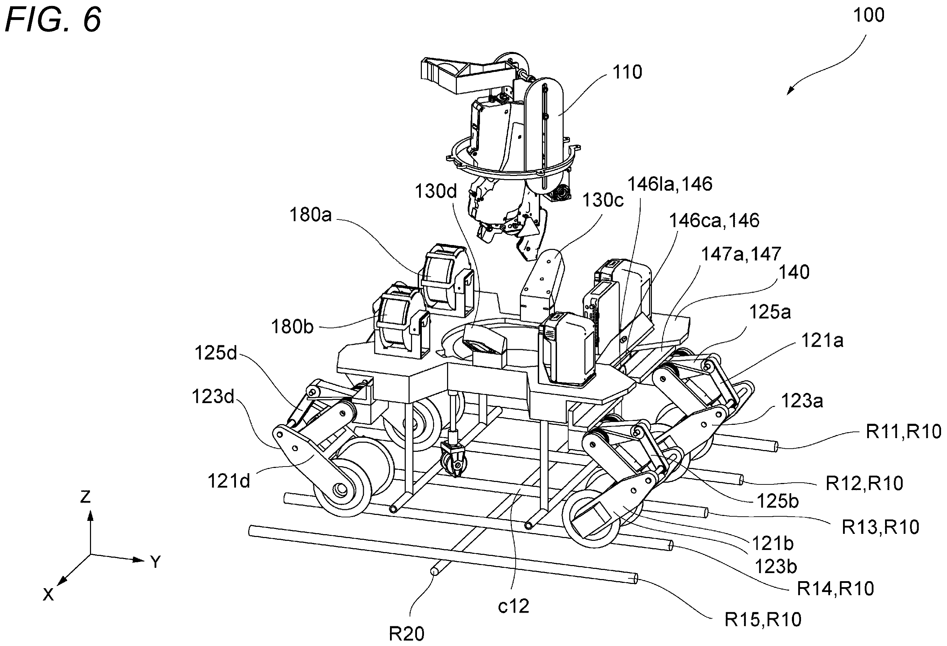

The rebar binding unit 110 is configured to bind an intersection point c12 (FIG. 6) between the first rebar R10 and the second rebar R20. Binding work of the rebar binding unit 110 at the intersection point c12 of the first rebar R10 and the second rebar R20 will be described in detail below.

As illustrated in FIGS. 1 and 2, the traveling unit 121 may have four traveling units 121a, 121b, 121c, and 121d (in the present embodiment, these are also respectively referred to as a "first traveling unit", a "second traveling unit", a "third traveling unit", and a "fourth traveling unit"). In the embodiment of the present disclosure, the traveling unit 121 is disposed on the rebar group R so that the rebar binding robot 100 advances in the Y-direction. The first traveling unit 121a, the second traveling unit 121b, the third traveling unit 121c, and the fourth traveling unit 121d respectively have a first roller portion 122a, a second roller portion 122b, a third roller portion 122c, and a fourth roller portion 122d, and the first roller portion 122a, the second roller portion 122b, the third roller portion 122c, and the fourth roller portion 122d are configured to travel on any one of the plurality of first rebars R10 along the Y-direction (first direction), which is an extension direction of the first rebars R10.

In the present embodiment, the traveling unit 121 is an example of a moving unit (a moving unit 120 described below). Instead of the traveling unit 121 or in addition to the traveling unit 121, the moving unit 120 may have the configuration of a moving unit other than the traveling unit 121.

In the embodiment of the present disclosure, the first traveling unit 121a, the second traveling unit 121b, the third traveling unit 121c, and the fourth traveling unit 121d are described as being configured to advance in the Y-direction as an example, but the first traveling unit 121a, the second traveling unit 121b, the third traveling unit 121c, and the fourth traveling unit 121d may also be configured to advance in a direction other than the Y-direction.

For example, the first traveling unit 121a, the second traveling unit 121b, the third traveling unit 121c, and the fourth traveling unit 121d may advance in a direction inclined at an angle of several degrees to several tens of degrees from the Y-direction. For example, the traveling units may advance in a direction inclined at an angle of several degrees to several tens of degrees from the Y-direction toward the +X-direction or the -X-direction. For example, when the orientation of the rebar binding robot 100 is inclined from the Y-direction due to presence of a foreign object on the first rebar R10 on which the rebar binding robot 100 is traveling, a direction in which the first traveling unit 121a, the second traveling unit 121b, the third traveling unit 121c, and the fourth traveling unit 121d advance will be at least temporarily inclined from the Y-direction to the +X-direction or -X-direction. In this case as well, for example, the first traveling unit 121a, the second traveling unit 121b, the third traveling unit 121c, and the fourth traveling unit 121d may advance in a direction (the -X-direction or the +X-direction) that returns the inclination of the orientation of the rebar binding robot 100 to the Y-direction, so that the rebar binding robot 100 advances so as to approximately follow the first rebar R10. This enables the rebar binding unit 110 of the rebar binding robot 100 to continuously perform the binding operation of the intersection point c12 of the first rebar R10 and the second rebar R20.

Furthermore, even in a construction site where the first rebar R10 is arranged in a curved shape, the first traveling unit 121a, the second traveling unit 121b, the third traveling unit 121c, and the fourth traveling unit 121d may be configured to advance in a curved shape to follow the first rebar R10 having a curved shape, and in this case, the first direction, which is the extension direction of the first rebar R10, may be different for each point that forms the curve.

As illustrated in FIGS. 1 and 2 and FIG. 3 described below, the sensor unit 130 (an example of a "detection unit") has a sensor 130a, a sensor 130b, a sensor 130c, and a sensor 130d (in the present embodiment, these are also respectively referred to as a "first sensor", a "second sensor", a "third sensor", and a "fourth sensor"). The first sensor 130a and the second sensor 130b are arranged to be spaced apart from each other along the Y-direction (in the present embodiment, a direction in which a straight line connecting the first sensor 130a and the second sensor 130b extends is also referred to as a "third direction") in FIGS. 1 and 2. In addition, the fourth sensor 130d is arranged on a side (a side on a back side of the paper of FIGS. 1 and 2) opposite to a side on which the third sensor 130c of the rebar binding robot 100 is provided, and the third sensor 130c and the fourth sensor 130d are arranged so as to be spaced apart from each other along a direction (the X-direction in the example illustrated in FIGS. 1 and 2; in the present embodiment, a direction in which a straight line connecting the third sensor 130c and the fourth sensor 130d extends is also referred to as a "fourth direction") intersecting the Y-direction in FIGS. 1 and 2.

The first sensor 130a, the second sensor 130b, the third sensor 130c, and the fourth sensor 130d are configured to be capable of detecting the first rebar R10 and/or the second rebar R20. For example, the first sensor 130a and the second sensor 130b may be configured to detect the first rebar R10, and the third sensor 130c and the fourth sensor 130d may be configured to detect the second rebar R20. Alternatively, the first sensor 130a, the second sensor 130b, the third sensor 130c, and the fourth sensor 130d may all be configured to be capable of detecting the first rebar R10 and the second rebar R20.

The first sensor 130a, the second sensor 130b, the third sensor 130c, and the fourth sensor 130d (examples of "obstacle detection units") may be configured to be capable of detecting an obstacle. Alternatively, the rebar binding robot 100 may be equipped with a sensor (an example of an "obstacle detection unit") capable of detecting obstacles in addition to the first sensor 130a, the second sensor 130b, the third sensor 130c, and the fourth sensor 130d.

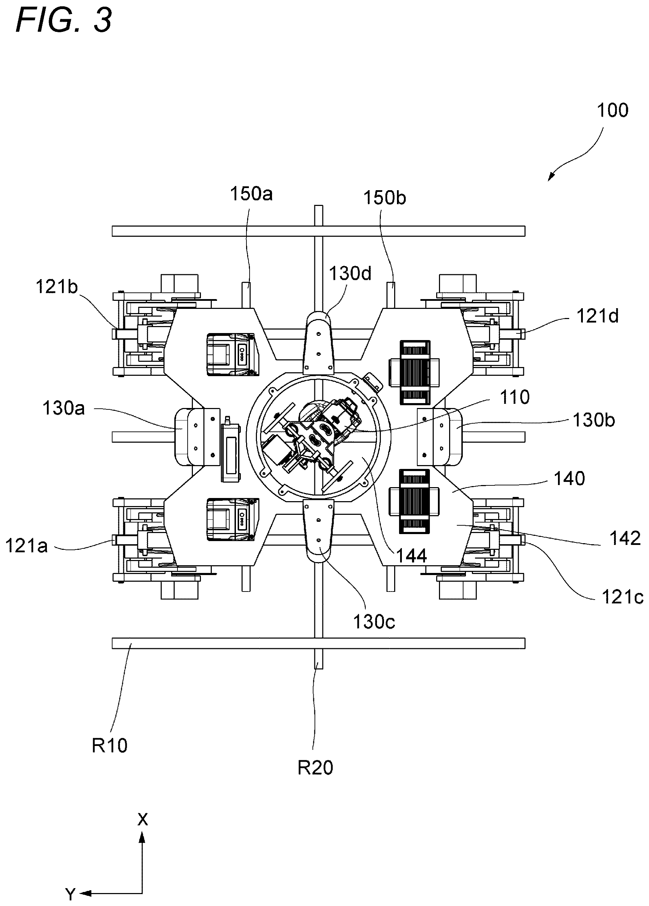

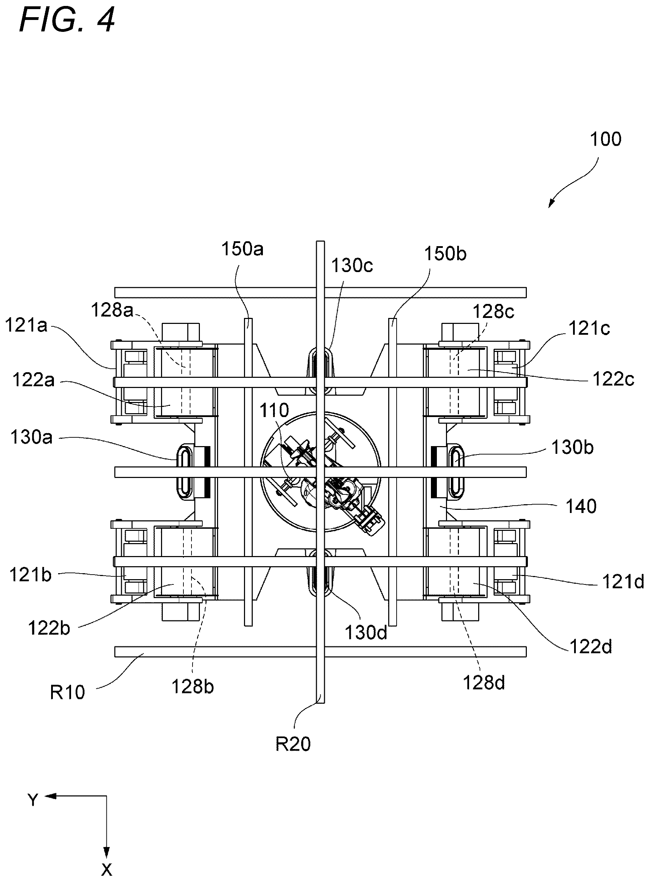

FIG. 3 illustrates a plan view of the rebar binding robot 100 as viewed from above (above in the Z-direction). FIG. 4 illustrates a plan view of the rebar binding robot 100 as viewed from below (below in the Z-direction).

As can be seen from FIGS. 3 and 4, the first traveling unit 121a and the second traveling unit 121b may be arranged on one side and the other side (on the left and right sides, respectively, in the X-direction in FIG. 3) of the fourth direction (X-direction) relative to the first sensor 130a. Furthermore, the third traveling unit 121c and the fourth traveling unit 121d may be disposed on one side and the other side in the fourth direction (X-direction) relative to the second sensor 130b. In other words, the first sensor 130a may be disposed between the first traveling unit 121a and the second traveling unit 121b in the fourth direction. Similarly, the second sensor 130b may be disposed between the third traveling unit 121c and the fourth traveling unit 121d in the fourth direction.

Furthermore, as illustrated in FIGS. 3 and 4, the third sensor 130c may be arranged between the first traveling unit 121a and the third traveling unit 121c in the third direction (Y-direction in FIGS. 3 and 4), and similarly, the fourth sensor 130d may be arranged between the second traveling unit 121b and the fourth traveling unit 121d in the third direction (Y-direction).

Furthermore, as illustrated in FIG. 4, for example, the first sensor 130a may be positioned, when viewed from below, on a straight line passing through a rotation shaft 128a of the first roller portion 122a forming the first traveling unit 121a and a rotation shaft 128b of the second roller portion 122b forming the second traveling unit 121b, or behind (in the -Y-direction in FIG. 4) the straight line passing through the rotation shafts 128a and 128b. Similarly, the second sensor 130b may be positioned, when viewed from below, on a straight line passing through a rotation shaft 128c of the third roller portion 122c forming the third traveling unit 121c and a rotation shaft 128d of the fourth roller portion 122d forming the fourth traveling unit 121d, or in front of (in the +Y-direction in FIG. 4) the straight line passing through the rotation shaft 128c and the rotation shaft 128d.

As illustrated in FIG. 3, FIG. 4, or the like, the first sensor 130a is disposed in front of (+Y-direction) the main body unit 140 in the Y-axis direction. Similarly, the second sensor 130b is disposed behind (-Y-direction) the main body unit 140 in the Y-axis direction. The third sensor 130c and the fourth sensor 130d are respectively disposed on the left and right sides in the X-direction when viewed from above in FIG. 3 of the main body unit 140. That is, as can be seen, for example, from FIG. 4, in the present embodiment, the first sensor 130a, the second sensor 130b, the third sensor 130c, and the fourth sensor 130d are positioned on or inside an outer edge of a rectangle virtually formed by connecting approximately centers of the first traveling unit 121a, the second traveling unit 121b, the third traveling unit 121c, and the fourth traveling unit 121d in a planar view of the rebar binding robot 100. In addition, the rectangle virtually formed by the first traveling unit 121a to the fourth traveling unit 121d may be a square, for example, when a distance between the respective traveling units in the X-direction and the Y-direction is approximately equal, and in this case, the first sensor 130a to the fourth sensor 130d may be positioned on the outer edge of the virtual square or the inside thereof. Furthermore, depending on the arrangement of the first traveling unit 121a to the fourth traveling unit 121d, the first traveling unit 121a to the fourth traveling unit 121d may virtually form a quadrangle other than a rectangle or a square, and in that case as well, the first sensor 130a to the fourth sensor 130d may be arranged on the outer edge of the virtual quadrangle or on the inside thereof.

The first sensor 130a, the second sensor 130b, the third sensor 130c, and the fourth sensor 130d are described as being positioned on or inside the outer edge of the rectangle virtually formed by connecting approximately the centers of the above-described first traveling unit 121a, the second traveling unit 121b, the third traveling unit 121c, and the fourth traveling unit 121d, but the present disclosure is not limited to the example. For example, depending on the arrangement of the first traveling unit 121a, the second traveling unit 121b, the third traveling unit 121c, and the fourth traveling unit 121d, and/or the shape of the main body unit 140, the first sensor 130a, the second sensor 130b, the third sensor 130c, and the fourth sensor 130d may be arranged differently. For example, the first sensor 130a, the second sensor 130b, the third sensor 130c, and the fourth sensor 130d may be positioned on or outside the outer edge of the rectangle virtually formed by connecting approximately the centers of the first traveling unit 121a, the second traveling unit 121b, the third traveling unit 121c, and the fourth traveling unit 121d in a planar view of the rebar binding robot 100.

As illustrated in FIGS. 1 and 3, the main body unit 140 may have a main body upper surface 142. The main body upper surface 142 may have, for example, a hole 144 having a circular shape and formed near the center, and the rebar binding unit 110 may be arranged to pass through the hole 144.

In the present embodiment, the rebar binding robot 100 may include, for example, two support bars 150 (a first support bar 150a and a second support bar 150b, respectively). The first support bar 150a and the second support bar 150b are bars extending in one direction, for example, and are provided in parallel in the fourth direction (the X-direction in FIGS. 1 to 4). Therefore, in the embodiment of the present disclosure, the first support bar 150a and the second support bar 150b are provided to be parallel to each other in a horizontal direction, for example. As illustrated in FIGS. 1 to 4, the first support bar 150a and the second support bar 150b may be spaced apart from each other in the Y-direction (third direction). The first support bar 150a and the second support bar 150b may be configured to support the main body unit 140 of the rebar binding robot 100, for example, when the rebar binding robot 100 moves horizontally (the X-direction in FIGS. 1 to 4, the fourth direction in the rebar binding robot 100).

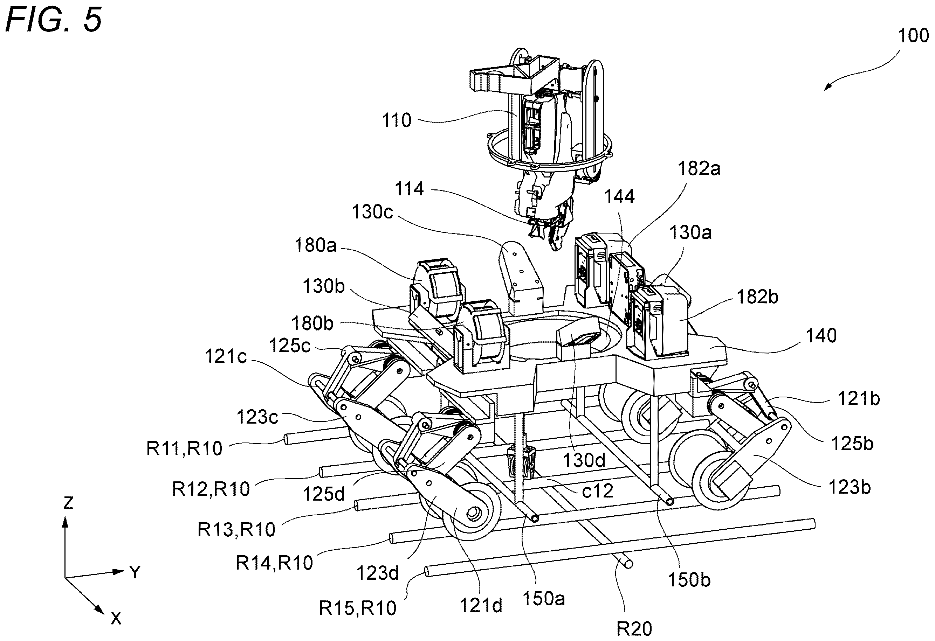

FIG. 5 is a perspective view of the rebar binding robot 100 with the rebar binding unit 110 removed, as viewed from diagonally rear right. FIG. 6 is a perspective view of the rebar binding robot 100 with the rebar binding unit 110 removed, as viewed from diagonally forward right. As illustrated in FIGS. 5 and 6, the rebar binding unit 110 may be provided so as to be movable in a vertical direction (Z-direction in FIG. 5) while passing through the hole 144. This allows, for example, the rebar binding unit 110 to be lowered, and when the rebar binding robot 100 reaches the intersection point c12 of the first rebar R10 and the second rebar R20, the intersection point c12 of the first rebar R10 and the second rebar R20 is bound together. As illustrated in FIGS. 5 and 6, the rebar binding robot 100 has reels 180a and 180b. The reels 180a and 180b accommodate wire used to bind rebars, and are configured so that when the rebar binding unit 110 binds the intersection point c12 of the first rebar R10 and the second rebar R20, the wire accommodated in the reel 180a and/or reel 180b is pulled out to bind the intersection point c12. Although detailed description is omitted, the rebar binding unit 110 has a wire twisting portion 114 (FIG. 5) at one end (a lower end in the Z-direction in FIG. 5) of the rebar binding unit 110 that has a wire guide, or the like, and is configured to perform rebar binding work. The rebar binding work of the wire twisting portion 114 may be achieved, for example, by a function similar to that of a known rebar binding machine.

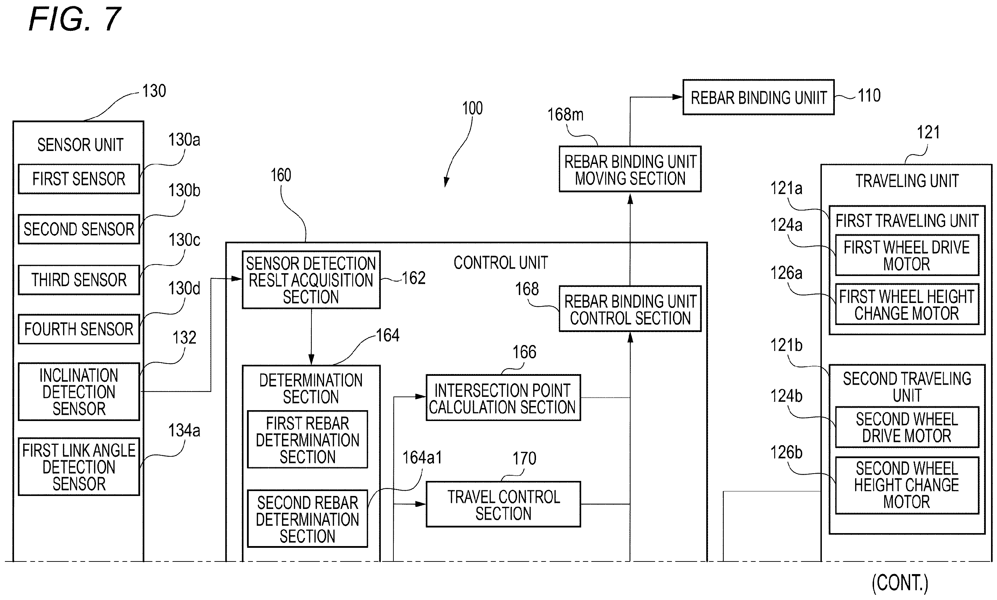

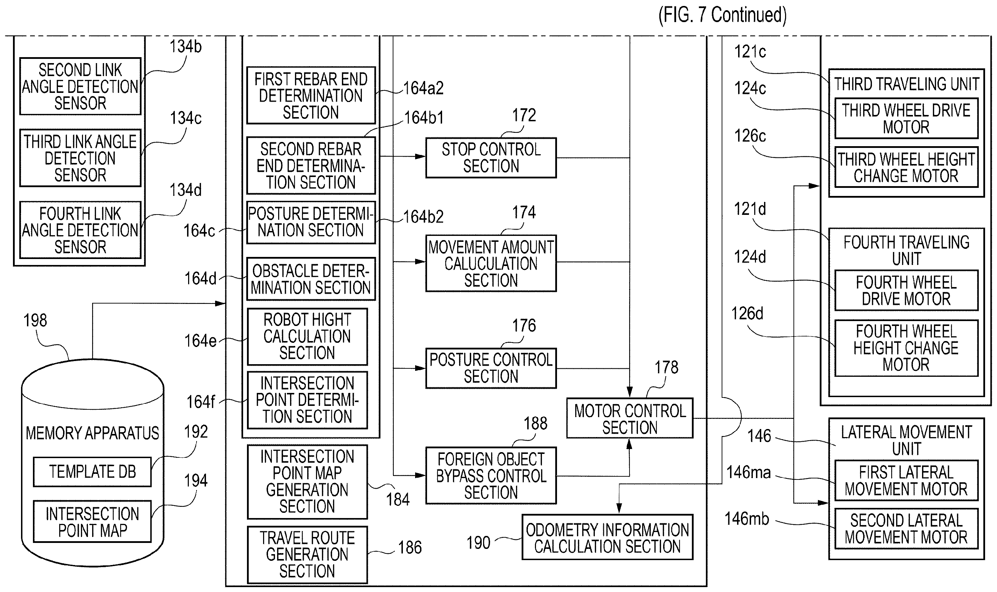

FIG. 7 is a diagram illustrating a functional block configuration of the rebar binding robot 100. As illustrated in FIG. 7, the rebar binding robot 100 may include, in addition to the rebar binding unit 110, the traveling unit 121, the sensor unit 130, and the like described above, a control unit 160, a lateral movement unit 146, and a memory apparatus 198.

The control unit 160 is configured to control movement (traveling) and binding works performed by the rebar binding robot 100. The control unit 160 may include a sensor detection result acquisition section 162, a determination section 164, an intersection point calculation section 166 (in the present embodiment, also referred to as an "intersection point estimation section" or "intersection point estimation unit"), a rebar binding unit control section 168, a travel control section 170 (in the present embodiment, also referred to as a "travel control unit"), a stop control section 172, a movement amount calculation section 174, a posture control section 176, a motor control section 178, a foreign object bypass control section 188, an odometry information calculation section 190, an intersection point map generation section 184, and a travel route generation section 186.

In the rebar binding robot 100 of the present embodiment, as illustrated in FIG. 1, the control unit 160 is disposed on an opposite side of the reel 180a and reel 180b with respect to the rebar binding unit 110 in the Y-direction. More specifically, as illustrated in FIG. 1, the reels 180a and 180b are disposed in the -Y-direction of the rebar binding unit 110, whereas the control unit 160 is disposed in the +Y-direction of the rebar binding unit 110. In particular, immediately after replacing the wire reel (reel 180a and/or reel 180b), the reel with the wire wound therearound becomes relatively heavy, but by positioning the control unit 160 on the opposite side of the rebar binding unit 110, it is possible to balance the weight.

The lateral movement unit 146 (FIG. 7) is configured to control the movement of the main body unit 140 of the rebar binding robot 100. In the rebar binding robot 100 according to the embodiment of the present disclosure, the rebar binding robot 100 may be moved in the horizontal direction by the lateral movement unit 146. The lateral movement unit 146 may be equipped with a first lateral movement motor 146ma and a second lateral movement motor 146mb, and for example, when lateral movement of the rebar binding robot 100 described below is performed, the main body unit 140 may be moved horizontally by the two motors 146ma and 146mb.

More specifically, as illustrated in FIG. 6, the lateral movement unit 146 has a first lateral movement roller 1461a and a first drive rack 146ca. The first lateral movement roller 1461a is provided on a first connecting portion 147a that connects the first traveling unit 121a and the second traveling unit 121b to the main body unit 140. The first drive rack 146ca is provided on a rear surface (a surface in the -Z-direction) of the main body unit 140 along the X-direction.

Similarly, as illustrated in FIG. 2, the lateral movement unit 146 has a second lateral movement roller 1461b and a second drive rack 146cb. The second lateral movement roller 1461b is provided on a second connecting portion 147b that connects the third traveling unit 121c and the fourth traveling unit 121d to the main body unit 140. The second drive rack 146cb is provided on a rear surface (a surface in the -Z-direction) of the main body unit 140 along the X-direction.

The second lateral movement roller 1461b forms, for example, a drive gear. The second drive rack 146cb has, for example, a plurality of teeth that mesh with external teeth provided on an outer periphery of the second lateral movement roller 1461b and are aligned linearly in the X-direction. The second lateral movement roller 1461b is driven by the second lateral movement motor 146mb. When the second lateral movement roller 1461b is rotated by the second lateral movement motor 146mb, the second lateral movement roller 1461b moves relative to the second drive rack 146cb along a longitudinal direction of the second drive rack 146cb. In this way, the main body unit 140 can move in the X-direction relative to the third traveling unit 121c and the fourth traveling unit 121d.

The first lateral movement roller 1461a (FIG. 6) also forms, for example, a drive gear, and the first drive rack 146ca has a plurality of teeth that mesh with external teeth provided on an outer periphery of the first lateral movement roller 1461a and are aligned linearly in the X-direction. The first lateral movement roller 1461a is driven by the first lateral movement motor 146ma. When the first lateral movement roller 1461a is rotated by the first lateral movement motor 146ma, the first lateral movement roller 1461a moves relative to the first drive rack 146ca along the longitudinal direction of the first drive rack 146ca, thereby enabling the main body unit 140 to move in the X-direction relative to the third traveling unit 121c and the fourth traveling unit 121d.

In this way, the first lateral movement roller 1461a and the second lateral movement roller 1461b may be respectively driven by the first lateral movement motor 146a and the second lateral movement motor 146b, to cause the main body unit 140 to move laterally (in the X-direction) relative to the traveling unit 121.

The memory apparatus 198 may include, for example, a memory medium (for example, a semiconductor memory element) or other media for non-transitory storage of one or more computer programs executed in the control unit 160, data used to control the rebar binding robot 100, and the like. The memory apparatus 198 may include, for example, a template database 198t. The template database 198t may store, for example, as described below, images of templates used when detecting the first rebar R10 and/or the second rebar R20, or detecting the end R10e of the first rebar R10 and/or the end R20e of the second rebar R20, using template matching based on the detection results by the sensor unit 130, or data obtained by applying image processing such as frequency analysis to the template images. In addition, the control unit 160 may further have a template data creation section, and may be configured to create template data based on images captured by the sensor unit 130 according to the site where the rebar binding work is to be performed, and store the template data in the template database 198t. The template data stored in the template database 198t may be accumulated, for example, whenever new template data is created, or may be deleted when binding work is completed at each construction site. Alternatively, the created template data may be stored in the template database 198t of the memory apparatus 198 for a certain period of time and then deleted, for example, periodically.

The memory apparatus 198 may include, for example, an intersection point map 194. The intersection point map 194 is, for example, a map in which a binding work region including estimated positions of intersection points is divided into a plurality of areas. Each region may include each estimated position. In other words, each region may correspond to a respective estimated position. The intersection point map 194 may be generated by, for example, the intersection point map generation section 184. The intersection point map 194 may further include information about the travel route. The travel route may be a route that passes through at least one of the plurality of regions included in the intersection point map 194. The travel route may be generated by, for example, the travel route generation section 186.

The sensor detection result acquisition section 162 acquires a detection result by the sensor unit 130. For example, the detection results of the first sensor 130a, the second sensor 130b, the third sensor 130c, and/or the fourth sensor 130d of the sensor unit 130 may be used to determine the position of the first rebar R10 and/or the second rebar R20 by the first rebar determination section 164a1 and/or the second rebar determination section 164a2 of the determination section 164 described below. In addition, the detection results of the first sensor 130a, the second sensor 130b, the third sensor 130c, and/or the fourth sensor 130d may be used to determine the position of the end R10e of the first rebar R10 and/or the end R20e of the second rebar R20 by a first rebar end determination section 164b1 and/or a second rebar end determination section 164b2 of the determination section 164.

The determination section 164 may include the first rebar determination section 164a1, the second rebar determination section 164a2, the first rebar end determination section 164b1, the second rebar end determination section 164b2, an obstacle determination section 164c, a posture determination section 164d, and a robot height calculation section 164e. The first rebar determination section 164al and the second rebar determination section 164a2 determine the position of the first rebar R10 and/or the second rebar R20, for example, using the detection results of the first sensor 130a, the second sensor 130b, the third sensor 130c, and/or the fourth sensor 130d acquired by the sensor detection result acquisition section 162. As described below, the first rebar determination section 164al and the second rebar determination section 164a2 may determine the position of the first rebar R10 and/or the second rebar R20 by performing template matching based on the captured images that are the detection results of the first sensor 130a to the fourth sensor 130d.

The first rebar end determination section 164b1 and the second rebar end determination section 164b2 determine the end R10e of the first rebar R10 and/or the end R20e of the second rebar R20, for example, using the detection results of the first sensor 130a, the second sensor 130b, the third sensor 130c, and/or the fourth sensor 130d acquired by the sensor detection result acquisition section 162. The first rebar end determination section 164b1 and the second rebar end determination section 164b2, like the first rebar determination section 164al and the second rebar determination section 164a2, may also determine the position of the end R10e of the first rebar R10 and/or the end R20e of the second rebar R20 based on template matching.

The robot height calculation section 164e may calculate a height of the rebar binding robot 100 from the rebar group R based on, for example, the detection results of the first sensor 130a, the second sensor 130b, the third sensor 130c, and/or the fourth sensor 130d. For example, when (for example, when an area including the first rebar R10 and/or the second rebar R20 is imaged) the first rebar R10 and/or the second rebar R20 are imaged by the first sensor 130a, the second sensor 130b, the third sensor 130c, and/or the fourth sensor 130d, the robot height calculation section 164e may calculate the height of the rebar binding robot 100 from the rebar group R by calculating a distance of the rebar binding robot 100 from the rebar group R based on a relative size of the first rebar R10 and/or the second rebar R20 in the captured image of the imaged first rebar R10 and/or the second rebar R20.

The height of the rebar binding robot 100 from the rebar group R may be calculated based on an angle of the traveling unit 121, for example. As illustrated in FIG. 6, the traveling unit 121a has a first main body side link portion 125a connected to the main body portion 140, and a first roller side link portion 123a connected to the first roller portion 122a, and the first main body side link portion 125a and the first roller side link portion 123a may form a link mechanism. In this case, a link angle, which is an angle between the first main body side link portion 125a and the first roller side link portion 123a, may be detected by a first link angle detection sensor 134a (FIG. 7) of the sensor unit 130, and the height of the first traveling unit 121a may be calculated based on the link angle.

Similarly, as illustrated in FIG. 2, the second traveling unit 121b, the third traveling unit 121c, and the fourth traveling unit 121d respectively have a second main body side link portion 125b and a second roller side link portion 123b, a third main body side link portion 125c and a third roller side link portion 123c, and a fourth main body side link portion 125d and a fourth roller side link portion 123d, and the heights of the second traveling unit 121b, the third traveling unit 121c, and the fourth traveling unit 121d may be respectively calculated by detecting link angles formed by the second main body side link portion 125b and the second roller side link portion 123b, the third main body side link portion 125c and the third roller side link portion 123c, and the fourth main body side link portion 125d and the fourth roller side link portion 123d using a second link angle detection sensor 134b, a third link angle detection sensor 134c, and a fourth link angle detection sensor 134d.

The robot height calculation section 164e may calculate the height of the rebar binding robot 100 from the rebar group R based on the heights (heights from the rebar group R) of the first traveling unit 121a, the second traveling unit 121b, the third traveling unit 121c, and the fourth traveling unit 121d calculated in this manner. For example, the height of the rebar binding robot 100 may be calculated from an average value of some or all of the calculated heights of the first traveling unit 121a, the second traveling unit 121b, the third traveling unit 121c, and the fourth traveling unit 121d. Furthermore, for example, when the rebar binding robot 100 is positioned parallel or nearly parallel to a virtual plane formed by the rebar group R, the height of the rebar binding robot 100 may be determined by any one of the heights of the first traveling unit 121a, the second traveling unit 121b, the third traveling unit 121c, and the fourth traveling unit 121d.

As illustrated in FIG. 7, the sensor unit 130 may include an inclination detection sensor 132 in addition to the first to fourth sensors 130a to 130d described above. As the inclination detection sensor 132, for example, a known inclination sensor or horizontal sensor, or other sensor capable of detecting an inclination angle of the rebar binding robot 100 may be used. The sensor detection result acquisition section 162 may also acquire the detection result of the inclination detection sensor 132. Based on the detection result of the inclination detection sensor 132, for example, the posture of the rebar binding robot 100 may be determined by the posture determination section 164d of the determination section 164, and based on the determination result of the posture determination section 164d, the posture control section 176 may drive height change motors 126 (a first height change motor 126a of the first traveling unit 121a, a second height change motor 126b of the second traveling unit 121b, a third height change motor 126c of the third traveling unit 121c, and/or a height change motor 126d of the fourth traveling unit 121d) of the traveling units 121 to adjust the posture of the rebar binding robot 100.

The rebar binding robot 100 may, for example, drive the height change motor 126 based on the detection result of the inclination detection sensor 132 so that the main body unit 140 is parallel to a surface (also referred to as a "rebar surface" in the present embodiment) formed by the first rebar R10 and/or the second rebar R20. For example, when the first rebar R10 and the second rebar R20 are arranged so that the rebar surface extends horizontally, if the rebar binding robot 100 is inclined in the X-direction, the height of the first traveling unit 121a and the third traveling unit 121c, or the second traveling unit 121b and the fourth traveling unit 121d, among the first traveling unit 121a to the fourth traveling unit 121d, may be changed to adjust the posture of the rebar binding robot 100.

The intersection point calculation section 166 estimates the intersection point c12 between the first rebar R10 and the second rebar R20 by calculating it. The intersection point calculation section 166 may, for example, calculate the position of the intersection point c12 based on the position of the first rebar R10 and the position of the second rebar R20 determined by the first rebar determination section 164a1 and the second rebar determination section 164a2, as described below. Based on the calculated position of the intersection point c12, the rebar binding robot 100 may perform binding work using the rebar binding unit 110. Based on the estimated position of the intersection point c12, the motor control section 178 may adjust the position of the rebar binding robot 100 using the first traveling unit 121a, the second traveling unit 121b, the third traveling unit 121c, and/or the fourth traveling unit 121d so that the rebar binding unit 110 is on the intersection point c12.

The rebar binding unit control section 168 controls the movement of the rebar binding unit 110 by controlling a rebar binding unit moving section 168m. The rebar binding unit 110 can take a binding position where it performs a binding operation to bind the intersection point c12 where the first rebar R10 and the second rebar R20 intersect, and a retreat position where it retreats after the binding operation is completed while moving to the intersection point c12 where the next binding operation is performed. The rebar binding unit 110 moves in the -Z-direction when moving from the retreat position towards the binding position, and moves in the +Z-direction when moving from the binding position towards the retreat position. Such movement of the rebar binding unit 110 in the Z-direction is achieved by the rebar binding unit moving section 168m formed by a motor or the like. In addition, a lifting and lowering operation of the rebar binding unit 110 in the Z-direction by the rebar binding unit moving section 168m is controlled by the rebar binding unit control section 168.

The rebar binding unit control section 168 also controls the binding operation of the rebar binding unit 110 at the intersection point c12 after the rebar binding unit 110 moves to the binding position. For example, the rebar binding unit 110 performs binding work using a wire pulled out from the reel 180 by a wire pull-out portion (described below) and is controlled by the rebar binding unit control section 168. For example, after moving the rebar binding robot 100 by the first traveling unit 121a, the second traveling unit 121b, the third traveling unit 121c, and/or the fourth traveling unit 121d so that the rebar binding unit 110 is positioned above the intersection point c12, the rebar binding unit control section 168 may control the rebar binding unit moving section 168m to lower the rebar binding unit 110 to a binding position approaching the intersection point c12, and perform binding at the intersection point c12.

The travel control section 170 controls traveling along the travel route. The travel control section 170 may, for example, control the traveling unit 121 via the motor control section 178 so that the rebar binding robot 100 follows the first rebar R10 on which the rebar binding robot 100 is traveling, based on information such as the position of the first rebar R10 determined by the first rebar determination section 164a1. For example, as illustrated in FIG. 5, when the rebar binding robot 100 travels on a first rebar R12 and a first rebar R14, the drive motors (a first wheel drive motor 124a driving the first roller portion 122a, a second wheel drive motor 124b driving the second roller portion 122b, a third wheel drive motor 124c driving the third roller portion 122c, and/or a fourth wheel drive motor 124d driving the fourth roller portion 122d) of the traveling units 121 may be driven to prevent the rebar binding robot 100 from coming off the first rebar R12 and the first rebar R14.

For example, among the first wheel drive motor 124a, the second wheel drive motor 124b, the third wheel drive motor 124c, and the fourth wheel drive motor 124d, the first wheel drive motor 124a and the third wheel drive motor 124c, which are the drive motors of the first traveling unit 121a and the third traveling unit 121c, which are arranged at the same position or approximately the same position in the X-direction, may be accelerated or decelerated relative to the second wheel drive motor 124b and the fourth wheel drive motor 124d, which are the drive motors of the second traveling unit 121b and the fourth traveling unit 121d, which are arranged on the other side in the X-direction, to adjust the position of the rebar binding robot 100 and make the rebar binding robot 100 travel to follow the first rebar R10.

Alternatively, the travel control section 170 may cause the rebar binding robot 100 to travel so as to follow the first rebar R10, for example, by adjusting the rotation speeds of the first wheel drive motor 124a, the second wheel drive motor 124b, the third wheel drive motor 124c, and/or the fourth wheel drive motor 124d. For example, by setting one or more of the rotation speeds of the first wheel drive motor 124a, the second wheel drive motor 124b, the third wheel drive motor 124c, and the fourth wheel drive motor 124d to a rotation speed different from the rotation speeds of the other wheel drive motors, or by setting the rotation speeds of all of the first wheel drive motor 124a, the second wheel drive motor 124b, the third wheel drive motor 124c, and the fourth wheel drive motor 124d to different rotation speeds from each other, it becomes possible to allow the rebar binding robot 100 to flexibly follow the first rebar R10.

The travel control section 170 may determine whether an obstacle has been detected during traveling based on the determination result of the obstacle determination section 164c. When it is determined that an obstacle has been detected, the travel route generation section 186 may generate (update) a travel route. The updated travel route does not need to include regions that contain obstacles. Furthermore, when an obstacle is no longer detected, the travel route generation section 186 may generate (update) a travel route to include the region in which the obstacle is located.

The travel control section 170 may determine whether an intersection point has been detected during traveling, based on the calculation result of the intersection point calculation section 166. When an intersection point is detected, the travel control section may control the traveling unit 121 by the motor control section 178 so as to travel to the detected intersection point. The travel control section 170 may determine in which region of the intersection point map the detected intersection point is included. The travel control section 170 may, for example, calculate own position of the rebar binding robot 100 based on the odometry information calculated by the odometry information calculation section 190, and then perform the determination process based on the own position.

The stop control section 172 is configured to control a stopping operation of the rebar binding robot 100. For example, as described below, when the rebar binding robot 100, which has been traveling over the first rebar R12 and the first rebar R14, is determined by the first rebar end determination section 164b1 and/or the second rebar end determination section 164b2 to be near an end R13e of a first rebar R13 or approaching the end R13e based on the detection results of the first sensor 130a, the second sensor 130b, the third sensor 130c, and/or the fourth sensor 130d, the stop control section 172 may control the motor control section 178 to drive and stop the first wheel drive motor 124a to the fourth wheel drive motor 124d, thereby stopping the rebar binding robot 100. In addition, the rebar binding robot 100 may be stopped not only at the end R13e of the first rebar R13, but also when it is determined that the rebar binding robot 100 is near an end R12e of the first rebar R12 and/or an end R14e of the first rebar R14, or is approaching the end R12e and/or the end R14e, instead of or in addition to the end R13e.

In addition, the stop control section 172 may, for example, when the intersection point c12 of the first rebar R10 and the second rebar R20 is calculated by the above-described intersection point calculation section 166, stop the rebar binding robot 100 in order to bind the intersection point c12 with the rebar binding unit 110.

As described below, the movement amount calculation section 174 may be configured to calculate an amount of movement when the rebar binding robot 100 moves laterally (in the X-direction), for example. For example, as described above, when the first rebar end determination section 164b1 and/or the second rebar end determination section 164b2 determine that the rebar binding robot 100 is near or approaching the end R12e of the first rebar R12 and the end R14e of the first rebar R14, the rebar binding robot 100 completes the rebar binding work at the intersection point c12 on the first rebar R13 located between the first rebar R12 and the first rebar R14, moves to another first rebar R10, and starts the rebar binding work at the intersection point c12.

For example, when the rebar binding robot 100 completes rebar binding work at the intersection point c12 on the first rebar R13 and then performs rebar binding work at the intersection point c12 on the first rebar R14, the rebar binding robot 100 moves in the X-direction by one interval for the X-direction interval of the first rebar R10. In this case, the movement amount calculation section 174 may calculate the movement amount based on the interval in the X-direction between adjacent first rebars R10 based on information on the position of the first rebar R10 determined by the first rebar determination section 164a1. Similarly, when the rebar binding robot 100 performs rebar binding work at the intersection point c12 on the first rebar R10 that is spaced apart by two or more in the X-direction, the amount of movement may be calculated based on the interval between the first rebars R10. Furthermore, the lateral movement (for example, horizontal movement) of the main body unit 140 by the lateral movement unit 146 during lateral movement may be performed based on the calculated movement amount. The movement amount calculation section 174 may calculate the movement amount in a direction other than the lateral movement amount. For example, the movement amount calculation section 174 may calculate the amount of vertical movement (movement in the first direction, Y-direction) of the rebar binding robot 100 based on the detection results of each sensor 130, the determination results by the rebar end determination section 164b1 and/or the rebar end determination section 164b2, or the like.

As the sensor unit 130, for example, a camera capable of taking two-dimensional or three-dimensional images may be used, and based on the detection results of the sensor unit 130, the position of a foreign object may be determined, for example, by the obstacle determination section 164c of the determination section 164. At a construction site where rebars are being assembled, for example, tools may be left on the surface of the rebars, or workers may be performing work thereon. These may be detected as foreign objects based on the detection results by the sensor unit 130, and based on the foreign object detection results, the foreign object bypass control section 188 may be configured to drive the first wheel drive motor 124a, the second wheel drive motor 124b, the third wheel drive motor 124c, and/or the fourth wheel drive motor 124d via the motor control section 178 to bypass the foreign object. Alternatively, the rebar binding robot 100 may be configured to bypass foreign objects by performing lateral movement, which will be described below.

The odometry information calculation section 190 calculates the position and posture of the rebar binding robot 100 as odometry information based on information from various sensors. For example, the odometry information calculation section 190 may acquire information such as the motor rotation speed output from an encoder (not illustrated) provided on each motor of the traveling unit 120, and then calculate a travel route of the rebar binding robot 100 by accumulating the information, thereby calculating the position of the rebar binding robot 100. In addition, the output of the sensor unit 130 may also be utilized in calculating the position of the rebar binding robot 100. In addition, the odometry information calculation section 190 may acquire information output from the sensor unit 130 and then calculate the posture of the rebar binding robot 100 based on the information. This makes it possible to estimate the travel route and the own position of the rebar binding robot 100 on the intersection point map.

The intersection point map generation section 184 generates the intersection point map 194. The intersection point map generation section 184 may generate the intersection point map 194 based on various information related to the rebars. For example, the intersection point map 194 may be generated based on placement information regarding the placement of the plurality of rebars. The placement information may include, for example, information regarding a pitch between each rebar. The information regarding the pitch may be, for example, information indicating the pitch, as well as information (the number of rebars and the overall dimensions of the rebars) for calculating the pitch. The placement information may also include information regarding the number of intersection points. The information regarding the number of intersection points may be, for example, information indicating the number of intersection points, or information (for example, the number of first rebars and the number of second rebars) for calculating the number of intersection points.

The travel route generation section 186 generates a travel route. The travel route generation section 186 may generate the travel route based on the intersection point map 194, for example. Specifically, the travel route generation section 186 may generate a travel route that passes through each region included in the intersection point map 194, for example. Information about the generated travel route may be included in the intersection point map 194.

The control unit 160 is, for example, a processor such as a central processing unit (CPU) that corresponds to a calculation section, and is a control unit that controls the execution of computer programs stored in the memory apparatus 198 and calculates and processes data. The processor is a calculation unit that executes a program that executes the operations (rebar tracking and traveling, lateral movement (for example, horizontal movement), rebar binding work, and the like) of the rebar binding robot 100 using each detection data, or the like. Each unit (for example, the sensor detection result acquisition section 162, or the like) of the control unit is realized by the processor executing the program stored in the memory apparatus 198.

The memory apparatus 198 may include, for example, a random access memory (RAM) and a read only memory (ROM). The RAM is a memory unit in which data can be rewritten, and may be composed of, for example, a semiconductor memory element. The RAM may store programs executed by the processor and data (for example, template data used to determine the position of rebars based on the detection results of the sensor unit 130, as described below) required to execute the programs. These are merely examples, and data other than these may be stored in the RAM, or some of these may not be stored.

The ROM is a memory unit from which data can be read, and may be composed of, for example, a semiconductor memory element. The ROM may store, for example, programs executed by the control unit 160 and data that is not rewritten.

The program executed by the control unit 160 may be provided by being stored in a computer-readable memory medium such as a memory apparatus 198 (for example, a RAM or ROM), or, when the rebar binding robot 100 of the present embodiment has a communication unit (not illustrated), the program may be provided via a communication network connected by the communication unit.

The above-described physical configuration is merely an example, and in the rebar binding robot 100 according to the embodiment of the present disclosure, the control unit 160 and the memory apparatus 198 do not necessarily have to be configured independently. For example, the rebar binding robot 100 may be equipped with a large-scale integration (LSI) that integrates a processor and a memory. In addition, the rebar binding robot 100 may be equipped with a graphical processing unit (GPU) as the control unit 160, and the various operations described above may be realized by the GPU executing a program.

In addition, the rebar binding robot 100 does not need to have the function of generating the intersection point map and/or the function of generating the travel route, and these functions may be provided by an apparatus other than the rebar binding robot 100. The apparatus other than the rebar binding robot 100 may be configured to include, for example, a detection unit capable of detecting a rebar, a moving unit, and a control portion. The moving unit may be configured as a traveling unit for traveling on the rebar, or may be configured as a flying unit (for example, a propeller or the like) capable of flying above the rebar. The other apparatus (which may be referred to as a "map generation apparatus", or the like) may move (travel, fly, or the like) over the rebars while detecting the rebars, and then generate an intersection point map and a travel route based on the detection results, and transmit this to the rebar binding robot 100. The rebar binding robot 100 may travel on the rebars based on the received intersection point map and travel route. In this manner, the rebar binding robot 100 and the map generation apparatus may form a system.

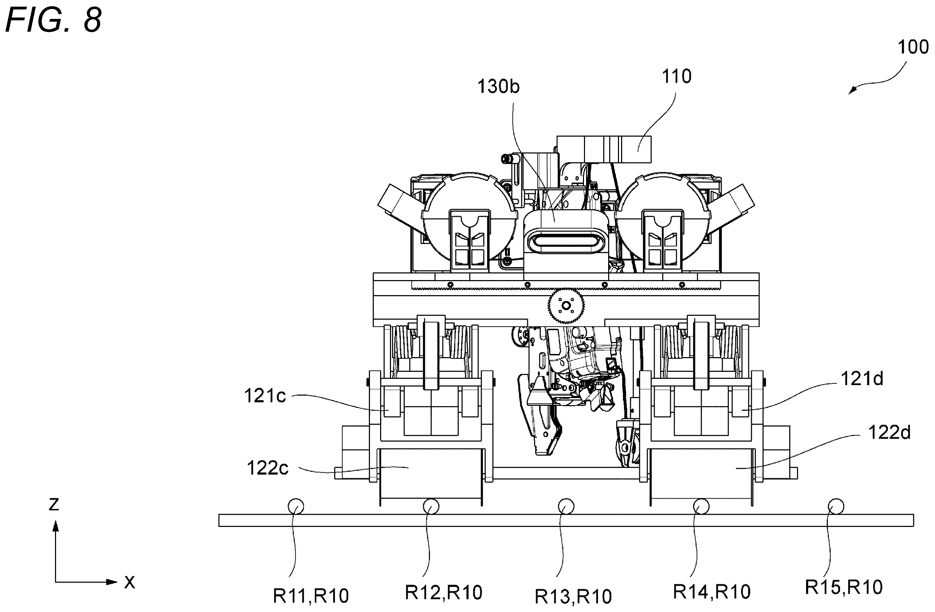

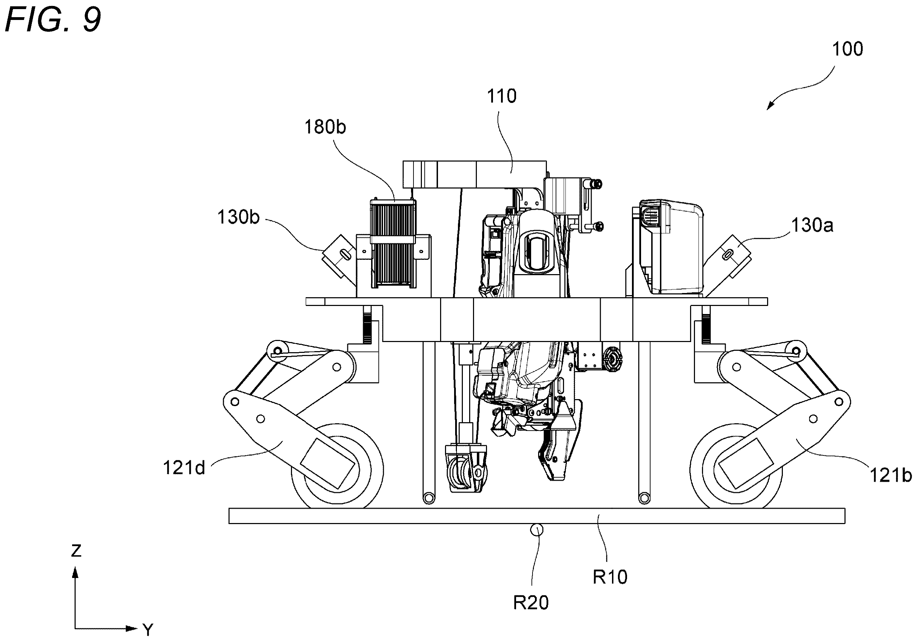

Next, a traveling operation of the rebar binding robot 100 on the rebars will be described with reference to FIGS. 8 and 9. FIG. 8 is a view of the rebar binding robot 100 traveling along the first rebar R10 as viewed from the Y-direction (-Y-direction). FIG. 9 is a view of the rebar binding robot 100 traveling along the first rebar R10 as viewed from the X-direction (+X-direction). In FIGS. 8 and 9, the rebar binding robot 100 travels in the first direction (Y-direction). As illustrated in FIGS. 8 and 9, when the rebar binding robot 100 is traveling, the third roller portion 122c of the third traveling unit 121c is located on the first rebar R12, and the fourth roller portion 122d of the fourth traveling unit 121d is located on the first rebar R14. As illustrated in FIG. 9, the second roller portion 122b of the second traveling unit 121b also travels on the first rebar R14, similar to the fourth roller portion 122d of the fourth traveling unit 121d. Although not illustrated in FIGS. 8 and 9, the first roller portion 122a of the first traveling unit 121a also travels on the first rebar R12, similar to the third roller portion 122c of the third traveling unit 121c. In this way, when the rebar binding robot 100 according to the embodiment of the present disclosure travels along the first rebar R10, the rebar binding robot 100 travels, for example, on a certain first rebar R10 (first rebar R12) and a first rebar R10 (first rebar R14) that is located two positions away from the certain first rebar R12, and binds the intersection point c12 of the first rebar R10 and the second rebar R20 that is located on a first rebar R13, which is a first rebar R10 that is located between the first rebar R12 and the first rebar R14 on which the rebar binding robot 100 travels.

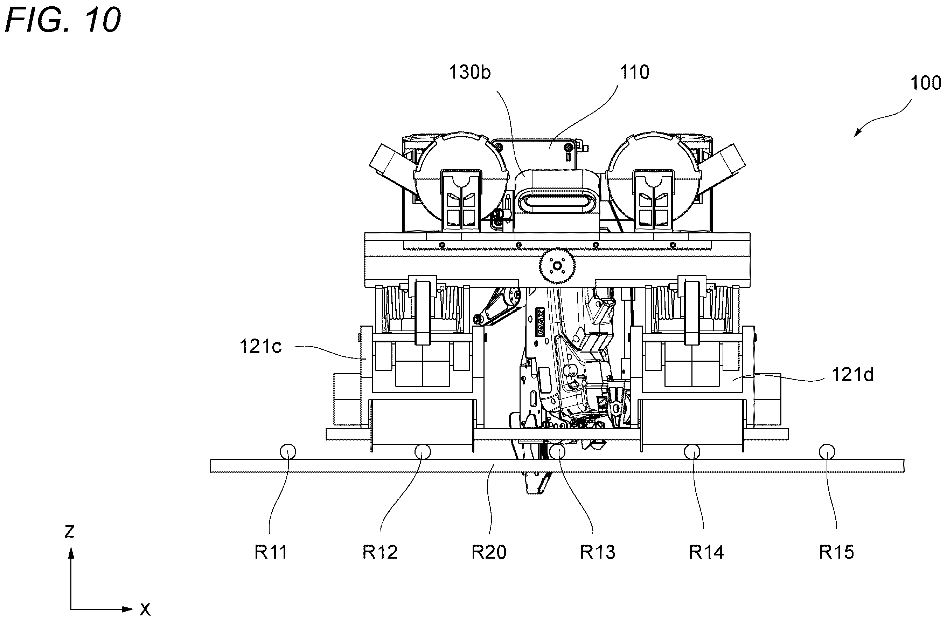

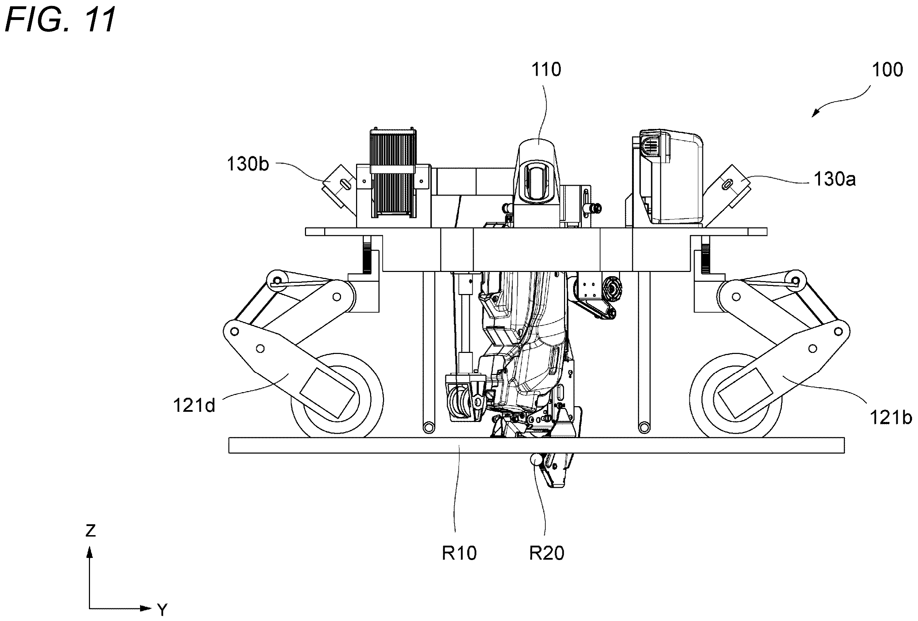

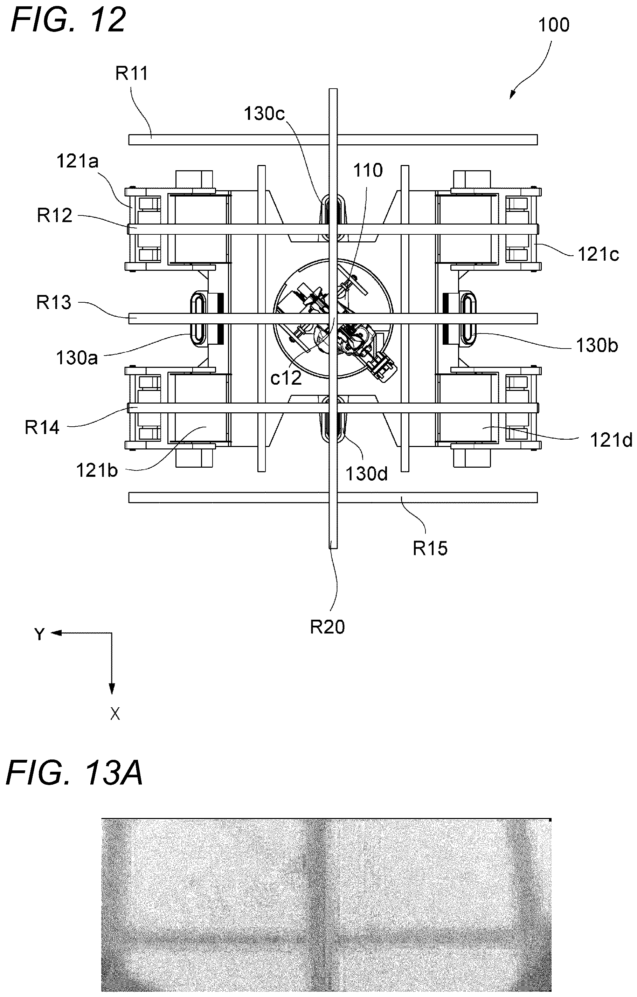

Next, the rebar binding robot 100 during rebar binding work will be described with reference to FIGS. 10, 11, and 12. FIG. 10 is a view of the rebar binding robot 100 that has stopped traveling and is performing binding work, as viewed from the Y-direction (-Y-direction). FIG. 11 is a view of the rebar binding robot 100 performing binding work, as viewed from the X-direction (+X-direction). FIG. 12 is a view of the rebar binding robot 100 performing the binding work, as viewed from below in the Z-direction (-Z-direction). FIGS. 10, 11, and 12 illustrate an example in which the rebar binding robot 100 binds the intersection point c12 of the first rebar R13 and the second rebar R20. When performing the binding work, the rebar binding robot 100 stops traveling (FIG. 10) and lowers the rebar binding unit 110 to perform the binding operation (FIGS. 11 and 12).

Next, a configuration for calculating the position of the rebar group R (first rebar R10 and second rebar R20) by the rebar binding robot 100 according to the embodiment of the present disclosure will be described. The rebar binding robot 100 according to the embodiment of the present disclosure includes the traveling unit 121 configured to travel on the rebar group R including a plurality of first rebars R1 of which an extension direction is the Y-direction (first direction) and a plurality of second rebars R2 of which an extension direction is the X-direction (second direction) intersecting the Y-direction (first direction) and that are arranged so as to intersect the first rebars R1, the sensor unit 130 configured to detect at least one first rebar R10 and/or at least one second rebar R20, and the first rebar determination section 164a1 and/or the second rebar determination section 164a2 (also referred to as a "rebar position calculation unit" in the present embodiment) configured to calculate the position of the at least one first rebar R1 and/or at least one second rebar R2 detected by the sensor unit 130 based on pixel values of a plurality of pixels that form a two-dimensional image generated by the detection result of the sensor unit 130. The rebar binding robot 100 according to the embodiment of the present disclosure can streamline the process of calculating the positions of the first rebar R10 and/or the second rebar R20 by calculating the positions of the first rebar R10 and/or the second rebar R20 based on a two-dimensional image generated by the detection results of the sensor unit 130. For example, by performing calculations based on two-dimensional images as detection results of the sensor units, a calculation load can be reduced compared to when calculating the position of the rebar using three-dimensional data.

In the rebar binding robot 100 according to the embodiment of the present disclosure, the two-dimensional image used to calculate the position of the first rebar R10 and/or the second rebar R20 may be a grayscale image. In this case, the rebar binding robot 100 is provided with the memory apparatus 198 for storing information of at least one template image including a partial image of the first rebar R10 and/or the second rebar R20, and the above-mentioned two-dimensional image includes a gradation image, and the first rebar determination section 164a1 and/or the second rebar determination section 164a2 (rebar position calculation unit) may be configured to calculate the position of at least one first rebar R10 and/or at least one second rebar R20 by comparing the gradation image with the template image.

In addition, in the rebar binding robot 100 according to the embodiment of the present disclosure, when a density value of a pixel in a grayscale image is equal to or greater than a predetermined threshold, it may be determined that the pixel corresponds to the first rebar R10 and/or the second rebar R20. In this case, the first rebar determination section 164a1 and/or the second rebar determination section 164a2 (rebar position calculation unit) may determine that at least a part of the first rebar R1 and/or at least a part of the second rebar R2 are present at a position corresponding to a pixel having a density value equal to or greater than a predetermined threshold (first threshold) when the density value of the pixel forming the grayscale image is equal to or greater than the predetermined threshold. Alternatively, when using a grayscale image as the two-dimensional image, the grayscale image may be generated by lowering the image density in regions where objects are present and increasing the image density in regions where objects are not present. In this case, when the density value of a pixel is less than a predetermined threshold, it may be determined that the pixel corresponds to the first rebar R10 and/or the second rebar R20.

In the rebar binding robot 100 according to the embodiment of the present disclosure, the grayscale image may be generated based on detection results of a three-dimensional sensor. In this case, the sensor unit 130 includes a three-dimensional sensor capable of detecting the x-coordinates, y-coordinates, and z-coordinates of a plurality of points on a surface of a detection target object, and a z-coordinate value detected by the three-dimensional sensor is converted into an image density that differs depending on the magnitude of the z-coordinate value, and the grayscale image may be generated by constructing a two-dimensional image based on the x-coordinates, y-coordinates, and image density.

Alternatively, the rebar binding robot 100 according to the embodiment of the present disclosure may be configured so that the sensor unit 130 captures grayscale images. In this case, the sensor unit 130 may include an imaging apparatus, and the grayscale image may be generated based on an image captured by the imaging apparatus.

In addition, the rebar binding robot 100 according to the embodiment of the present disclosure may calculate the position of the first rebar R10 and/or the second rebar R20 based on a degree of matching. In this case, the first rebar determination section 164a1 and/or the second rebar determination section 164a2 (rebar position calculation unit) may be configured to calculate a position of at least one first rebar R10 and/or at least one second rebar R20 based on the degree of matching between the grayscale image and the template image.

In an embodiment of the present disclosure, the degree of matching may be calculated, for example, by comparing the detection results by the sensor unit 130 with a two-dimensional image generated based on the detection results by the sensor unit 130, or with a template image. For example, the pixel values of all pixels in a partial image to be compared among the two-dimensional image generated based on the detection results by the sensor unit 130 may be compared with the pixel values of all pixels in a template image, and the degree of matching may be calculated by expressing the proportion of matching pixels as a percentage based on whether the pixel values of corresponding pixels in the two images to be compared match. For example, when a template image contains 50,000 pixels and is compared with 50,000 pixels in a comparison grayscale image, and the density of 40,000 pixels matches or nearly matches (for example, the difference between the two is within 10%), the degree of matching may be calculated to be 80%.

In this case, the position of the first rebar R10 and/or the second rebar R20 may be calculated using a reference value of the degree of matching. In this case, the first rebar determination section 164a1 and/or the second rebar determination section 164a2 (rebar position calculation unit) may determine whether the matching degree is equal to or greater than a predetermined reference value, and when the matching degree is equal to or greater than the predetermined reference value, may determine that the first rebar R10 and/or the second rebar R20 are present within a detection range of the sensor unit 130.

In the rebar binding robot 100 according to the embodiment of the present disclosure, a different value may be set for each height as the reference value of the matching degree. In this case, the rebar binding robot 100 according to the embodiment of the present disclosure includes the robot height calculation section 164e (also referred to as a "robot height calculation unit" in the present embodiment) that calculates the height of the rebar binding robot 100 from the rebar group R, and the predetermined reference value includes a plurality of reference values corresponding to different heights of the rebar binding robot 100, and the first rebar determination section 164a1 and/or the second rebar determination section 164a2 (rebar position calculation unit) may be configured to determine whether a reference value corresponding to the height of the rebar binding robot 100 from the rebar group R calculated by the robot height calculation section 164e (robot height calculation unit) exists among the plurality of reference values. Then, when it is determined that a reference value corresponding to the height of the rebar binding robot 100 exists among the plurality of reference values, the rebar binding robot 100 may calculate the position of the first rebar R10 and/or the second rebar R20 based on this reference value. On the other hand, when it is determined that a reference value corresponding to the height of the rebar binding robot 100 does not exist among the plurality of reference values, the rebar binding robot 100 may calculate a new reference value corresponding to the measured height of the rebar binding robot 100 based on at least two of the plurality of reference values.

In the embodiment of the present disclosure, for example, a plurality of reference values may be set for the height of the rebar binding robot 100 from the rebar group R at predetermined intervals. For example, five reference values may be set for the height of the rebar binding robot 100 from the rebar group R, starting from 10 cm and ending at 30 cm in increments of 5 cm. In this case, for example, when the robot height calculation section 164e determines that the height of the rebar binding robot 100 from the rebar group R is 20 cm, and the reference value for the height of 20 cm is set to 60%, then 60% may be used as the reference value. Also, for example, when the robot height calculation section 164e determines that the height of the rebar binding robot 100 from the rebar group R is 23 cm, and no reference value for 23 cm has been set, a new reference value may be set based on, for example, a reference value of 20 cm and a reference value of 25 cm. For example, when the reference value for the height of 20 cm is 60% and the reference value for the height of 25 cm is 50%, the reference value at 23 cm may be calculated by linear interpolation as 50% + (((60% - 50%) * ((25 cm - 23 cm) / (25 cm - 20 cm))) = 54%. The newly calculated reference value may be stored in the memory apparatus 198, for example, and may be used in subsequent operations as necessary. The above height, reference value, and method for calculating the new reference value are merely examples, and are not limited thereto. For example, more reference values may be set, and reference values may be set for heights less than 10 cm or greater than 30 cm, for example.

A process of calculating a position of a rebar by the rebar binding robot according to the embodiment of the present disclosure will be described below.

First, a specific example of the sensor unit 130 used in the rebar binding robot 100 will be described in detail. As the sensor unit 130, for example, a 3D distance camera such as a Time of Flight (ToF) camera (for example, TOF cam-635 manufactured by ESPROS Photonics Corporation) can be used. A 3D distance camera, for example, can output images in which the shade of light varies depending on the distance of each imaging target object from the camera, and the distance to the imaging target object is obtained for each pixel, with relatively closer objects being represented with a higher shade (closer to black) and relatively more distant objects being represented with a lower shade (closer to white). In the embodiment of the present disclosure, while the rebar binding robot 100 is traveling on the rebar group R, the distance between the rebar binding robot 100 and the rebar group R does not change significantly, so rebars may be detected by recognizing relatively dark objects as rebars (the first rebar R10 and/or the second rebar R20).

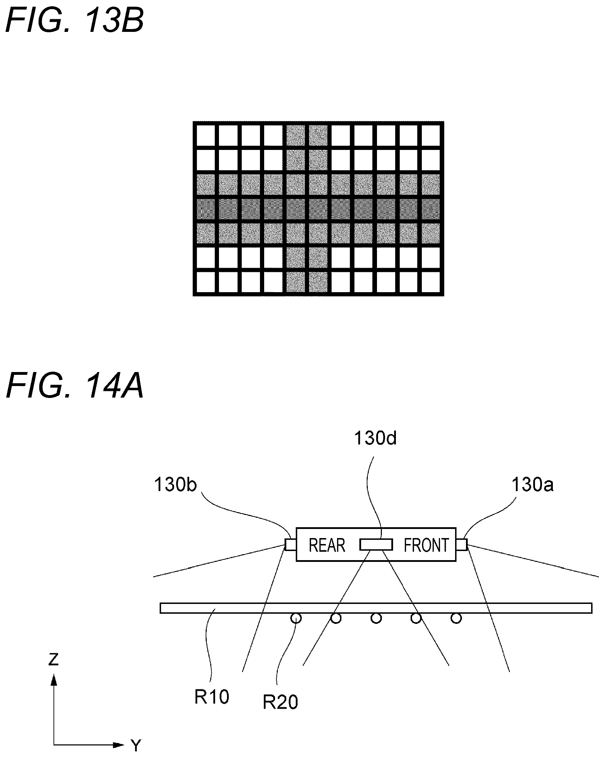

FIGS. 13A and 13B illustrate images output by a 3D range camera. FIG. 13A illustrates an image taken by the 3D distance camera near an intersection point of the first rebar R10 and the second rebar R20. FIG. 13B illustrates a schematic image of a vicinity of the intersection point of the first rebar R10 and the second rebar R20. As illustrated in FIG. 13A, the image captured by the 3D distance camera shows shades of light and dark, and in the embodiment of the present disclosure, areas of high density can be recognized as the first rebar R10 and/or the second rebar R20. As illustrated in FIG. 13B, an image in which the shade of light of density varies from pixel to pixel is obtained.

The sensor unit 130 is not limited to the imaging apparatus such as a camera exemplified above, and other sensors may be used. For example, a laser capable of acquiring information in the depth direction or height direction may be used. For example, a two-dimensional image using image density similar to that described above may be generated based on depth information obtained by a laser.

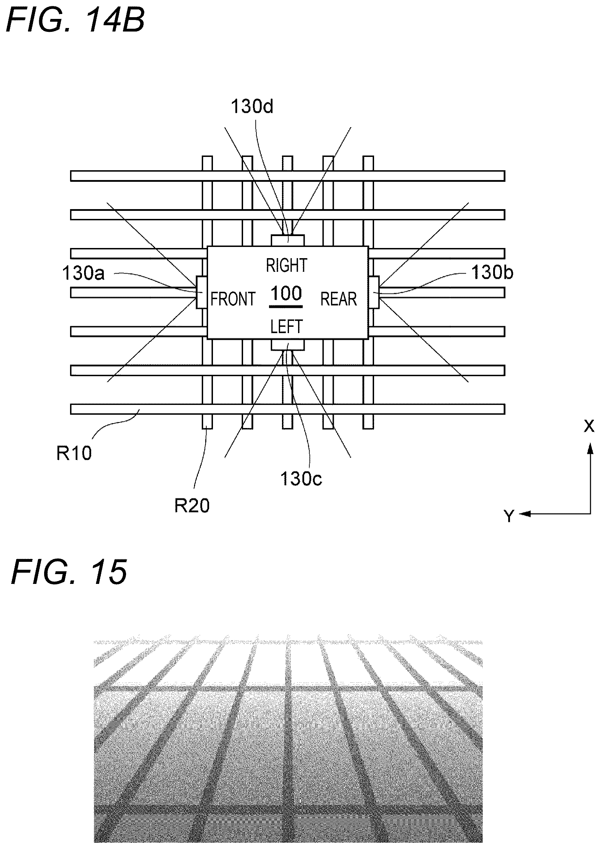

Next, a process of detecting rebars based on an image (a grayscale image in the present embodiment) captured and acquired by the sensor unit 130 will be described. First, the arrangement of the first sensor 130a, the second sensor 130b, the third sensor 130c, and the fourth sensor 130d of the sensor 130 will be described with reference to FIGS. 14A and 14B. FIGS. 14A and 14B are diagrams that schematically illustrate the arrangement of the first sensor 130a, the second sensor 130b, the third sensor 130c, and the fourth sensor 130d. FIG. 14A is a schematic side view of the rebar binding robot 100 as viewed from the horizontal direction (X-direction). FIG. 14B is a schematic top view of the rebar binding robot 100 as viewed from above (upper side in the Z-direction). FIG. 14A illustrates the first sensor 130a, the second sensor 130b, and the third sensor 130c, and also schematically illustrates imaging ranges of the first sensor 130a, the second sensor 130b, and the third sensor 130c.

As illustrated schematically in FIGS. 14A and 14B, the first sensor 130a and the second sensor 130b, which are spaced apart from each other in the Y-direction, are disposed so as to capture an image obliquely downward. The third sensor 130c and the fourth sensor 130d (not illustrated) are similarly disposed so as to capture images obliquely downward. The first sensor 130a and the second sensor 130b are set, for example, so that an angle of view that defines the imaging range is, for example, 80° or more and 100° or less. Further, the third sensor 130c and the fourth sensor 130d are set so that the angle of view is, for example, 50° or more and 70° or less. Any of the sensors 130 may be set to have other angles of view. As described above, when determining whether a foreign object is present based on the detection results of the first sensor 130a, the second sensor 130b, the third sensor 130c, and/or the fourth sensor 130d, the imaging range of each sensor may be changed, for example, by pointing the sensor at an upward angle.

FIG. 15 is a diagram schematically illustrating an image captured by the first sensor 130a. As illustrated in FIG. 15, in the embodiment of the present disclosure, the first sensor 130a is positioned to capture an image in a diagonally downward direction, so that the distance between adjacent first rebars R10 becomes narrower from the front to the back. In the embodiment of the present disclosure, the position of each rebar (the plurality of first rebars R10 and the plurality of second rebars R20) that forms the rebar group R can be detected based on the image thus obtained, for example by performing template matching. In the embodiment of the present disclosure, by using template matching, for example, rebars (first rebar R10 and/or second rebar R20) are detected based on the similarity (also referred to as the "matching degree" in the present embodiment) between a captured image and a previously prepared image, a grayscale image including shading parts corresponding to the rebars is prepared as a template, the images captured by each sensor unit 130 are scanned, and the similarity in a scanning direction is calculated.

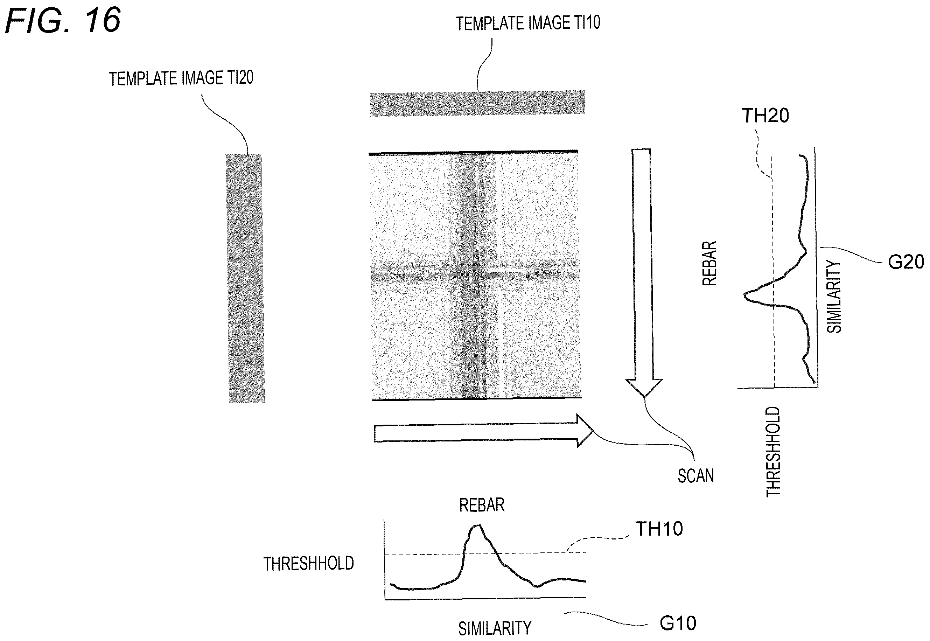

With reference to FIG. 16, template matching performed in the embodiment of the present disclosure will be described. FIG. 16 is a schematic diagram for illustrating template matching according to the present embodiment. FIG. 16 illustrates a captured image near the intersection point c12 of the first rebar R10 and the second rebar R20, as well as template images TI10 and TI20 for scanning in the X and Y-directions. FIG. 16 also illustrates the template images TI10 and TI20, and schematic graphs G10 and G20 of the similarities calculated in response to the respective scans. The template images TI10 and TI20 are scanned in the Y and X-directions, respectively, and the similarities with the template images TI10 and TI20 are calculated. Then, locations on the captured image where a maximum value of the calculated similarities exceeds a threshold are determined to correspond to locations where rebars are present. As illustrated in graphs G10 and G20, in the distribution of similarities along the Y and X-directions, portions exceeding a threshold TH10 and a threshold TH20 are confirmed, and these correspond to positions where rebars are present. The degree of similarity (degree of matching) may be calculated, for example, by comparing the color density of each pixel in the captured image with the color density of each pixel forming the template image. For example, first, a distance to a target object for each pixel in the captured image is extracted as a color density. Next, when the total or average color density of the entire captured image is light (for example, lower than a predetermined threshold), it is determined that there are no rebars in the captured image. On the other hand, when the color density is high (for example, higher than a predetermined threshold), a difference between the extracted color density and the color density of each pixel forming the template image is compared for each pixel. A position of the captured image pixel where the sum of absolute values of the differences between the color densities of the captured pixels and the pixels forming the template image is the lowest may be extracted as a rebar position. In this way, the first rebar R10 and the second rebar R20 can be detected by template matching based on the similarity calculated by scanning the template image against the captured image.

As described above with reference to FIG. 15, in the embodiment of the present disclosure, in the image captured by the first sensor 130a, the distance between the first rebars R10 adjacent to each other in the X-direction changes along the Y-direction. Similarly, also in the image captured by the second sensor 130b, the X-direction distance between the first rebars R10 changes in the Y-direction, and in the images captured by the third sensor 130c and the fourth sensor 130d, the Y-direction distance between the second rebars R20 changes along the X-direction. Therefore, for example, the captured image may be corrected by performing orthogonal transformation so that the distances between rebars in the captured image become approximately equal, and then template matching may be performed. It is also possible to detect rebars based on template matching by preparing an image in which the distance between rebars varies as illustrated in FIG. 15 as a template without performing image transformation such as orthogonal transformation.

In the template matching according to the embodiment of the present disclosure, for example, a frequency analysis may be performed on each image, and relevance between the captured image and the template image may be evaluated using a phase correlation method.

The positions of the first rebar R10 and the second rebar R20 can also be estimated by, for example, using a three-dimensional sensor to obtain three-dimensional XYZ data of a target object within the detection range. As described above, in the rebar binding robot 100 according to the embodiment of the present disclosure, by performing template matching in which the third-dimensional data in the Z-direction is treated as pixel density information, an amount of calculation required to calculate the position of the intersection point c12 can be made relatively small compared to the case in which calculations are performed based on, for example, three-dimensional XYZ data. When performing binding work at the intersection point c12 while traveling, as with the rebar binding robot 100 according to the embodiment of the present disclosure, a method for determining the position of the rebar using template matching, which can reduce the amount of calculations, is preferably used.

Next, a method for determining the intersection point of the first rebar R10 and the second rebar R20 in the embodiment of the present disclosure will be described. In the embodiment of the present disclosure, when the rebar binding robot 100 determines the intersection point c12 of the first rebar R10 and the second rebar R20, the first sensor 130a and the second sensor 130b may be configured to detect the first rebar R10, as described above. That is, as described above, the rebar binding robot 100 includes the rebar binding unit 110 configured to bind the intersection point c12 of the first rebar R10 and the second rebar R20 of the rebar group R, the sensor unit 130 includes the first sensor 130a and the second sensor 130b that are arranged spaced apart from each other along the third direction and are configured to be able to detect at least the first rebar R10, and the at least one template image described above includes the template image TI10 (first template image) that includes a partial image of the first rebar R10. Further, in the rebar binding robot 100, the traveling unit 121 advances in the Y-direction (first direction), and the direction (third direction) in which the first sensor 130a and the second sensor 130b are arranged is parallel to the Y-direction (first direction). Also, the first rebar determination section 164a1 and/or the second rebar determination section 164a2 (rebar position calculation unit) calculates the position of the first rebar R10 by comparing the detection results of the first sensor 130a and/or the second sensor 130b with the first template image, and the rebar binding unit 110 may bind the intersection point c12 on the first rebar R10 of which the position has been calculated.

In addition, in this case, the rebar binding robot 100 may be further configured so that the third sensor 130c and the fourth sensor 130d detect the second rebar R20 in addition to the first rebar R10 and estimate the intersection point c12. That is, the rebar binding robot 100 further includes the intersection point calculation section 166 (also referred to as an "intersection point estimation unit" in the present embodiment) that estimates the intersection point c12, the sensor unit 130 includes the third sensor 130c and the fourth sensor 130d that are arranged spaced apart from each other along the fourth direction that intersects with the third direction and are configured to be able to detect at least the second rebar R20, and at least one template image includes the template image TI20 (second template image) that includes a partial image of the second rebar R20. Further, the rebar binding robot 100 may be arranged so that the fourth direction is parallel to the X-direction (second direction). Also, the first rebar determination section 164a1 and/or the second rebar determination section 164a2 (rebar position calculation unit) calculates the position of the second rebar R20 by comparing the detection results of the third sensor 130c and/or the fourth sensor 130d with the second template image. The intersection point estimation section (intersection point estimation unit) estimates an intersection point between the calculated first rebar R10 and the calculated second rebar R20 as the intersection point c12, and the rebar binding unit 110 may be configured to bind the estimated intersection point c12.

In addition, when the rebar binding robot 100 detects the end R10e of the first rebar R10, it may cause the third sensor 130c and/or the fourth sensor 130d to detect the first rebar R10, and the first rebar R10 detected by the third sensor 130c and/or the fourth sensor 130d may be used to calculate a lateral movement amount of the rebar binding robot 100, which will be described below. That is, when the traveling unit 121 moves from the first rebar R10 on which the traveling unit 121 advances to another first rebar R10, the rebar binding robot 100 includes the movement amount calculation section 174 (movement amount calculation unit) that calculates the amount of movement of the traveling unit 121 based on position information of the first rebar R10 calculated by the first rebar determination section 164a1 and/or the second rebar determination section 164a2 (rebar position calculation unit). The first rebar determination section 164a1 and/or the second rebar determination section 164a2 (rebar position calculation unit) calculates the position of the first rebar R10 on which the traveling unit 121 advances based on the detection results of the first sensor 130a and/or the second sensor 130b. Then, when the matching degree of the detection result of the first sensor 130a is less than a predetermined reference value, it is determined whether the matching degree is equal to or greater than a predetermined end reference value, and if it is determined that the matching degree is equal to or greater than the predetermined end reference value, it is determined that the end R10e of the first rebar R10 is present within the detection range of the first sensor 130a. Then, when it is determined that the end R10e of the first rebar R10 is present within the detection range of the first sensor 130a, the third sensor 130c and/or the fourth sensor 130d are set to detect the first rebar R10. Further, the first rebar determination section 164a1 and/or the second rebar determination section 164a2 (rebar position calculation unit) calculates the position of another first rebar R10 that is separated in the X-direction (second direction) from the first rebar R10 on which the traveling unit 121 advances, based on the detection results of the third sensor 130c and/or the fourth sensor 130d. Then, the movement amount calculation section 174 (movement amount calculation unit) calculates the movement amount of the traveling unit 121 in the X-direction (second direction) based on the position of the other first rebar R10 calculated by the first rebar determination section 164a1 and/or the second rebar determination section 164a2 (rebar position calculation unit) and the position of the first rebar R10 on which the traveling unit 121 advances, and the traveling unit 121 may be configured to move in the X-direction (second direction) based on the calculated movement amount in the X-direction (second direction).

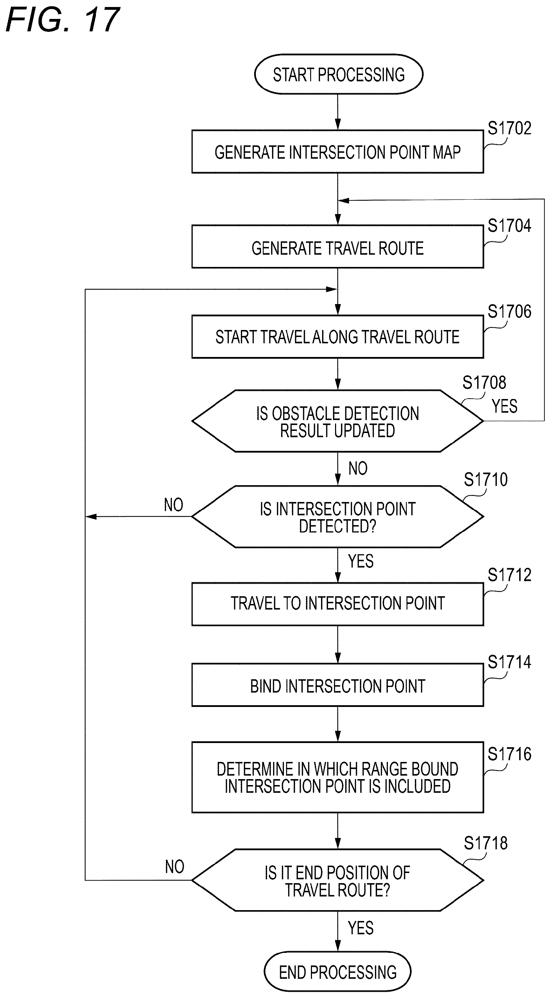

A method for controlling the travel of the rebar binding robot 100 according to the embodiment of the present disclosure will be described with reference to FIG. 17. FIG. 17 is a flowchart of the method for controlling the travel of the rebar binding robot 100 in the embodiment of the present disclosure.

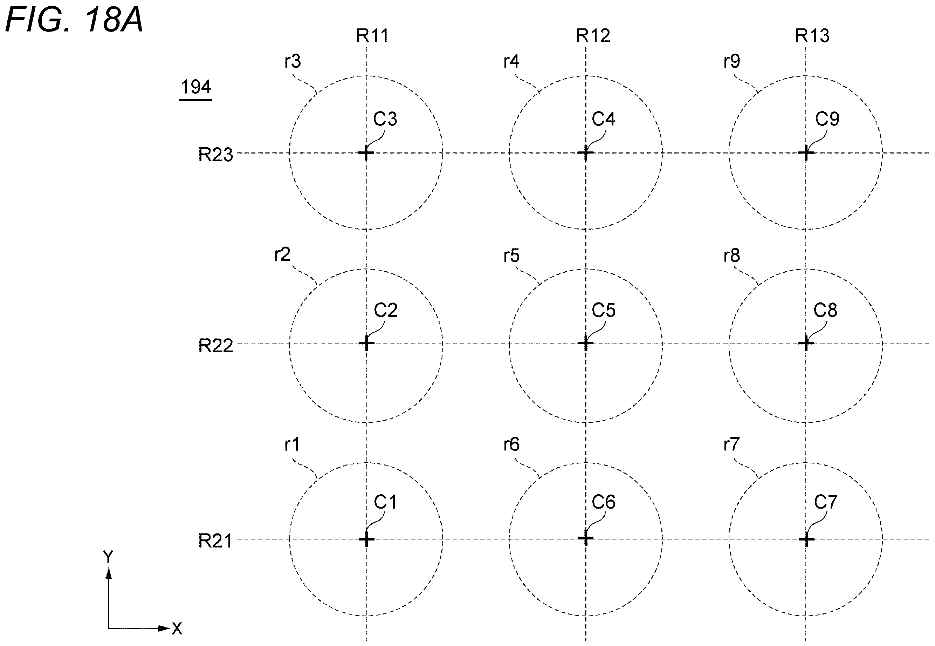

First, various pieces of information about the rebars are obtained, and an intersection point map is generated based on the obtained information (S1702). FIG. 18A is a schematic diagram illustrating an example of the intersection point map 194. In the example illustrated in FIG. 18A, nine intersection points C1 to C9 are illustrated in the intersection point map 194 as examples of estimated positions C of intersection points in the binding work region of the rebar binding robot 100. Each estimated position C is the estimated position of the intersection point between a first rebar R1 of which the extension direction is the Y-direction (first direction) and a second rebar R2 of which the extension direction is the X-direction (second direction). Specifically, for example, an estimated position C1 is an estimated position of an intersection point between a first rebar R11 and a second rebar R21, an estimated position C2 is an estimated position of an intersection point between the first rebar R11 and a second rebar R22, and an estimated position C3 is an estimated position of an intersection point between the first rebar R11 and a second rebar R23. Also, for example, an estimated position C6 is an estimated position of an intersection point between a first rebar R12 and the second rebar R21, an estimated position C5 is an estimated position of an intersection point between a first rebar R12 and the second rebar R22, and an estimated position C4 is an estimated position of an intersection point between a first rebar R12 and the second rebar R23. Also, for example, an estimated position C7 is an estimated position of an intersection position between a first rebar R13 and the second rebar R21, an estimated position C8 is an estimated position of an intersection point between a first rebar R13 and the second rebar R22, and an estimated position C9 is an estimated position of an intersection point between a first rebar R13 and the second rebar R23.

The intersection point map 194 further includes a number of regions r that include each estimated position C. In the example illustrated in FIG. 18A, nine regions r1 to r9 including nine estimated positions C1 to C9, respectively, are illustrated in the intersection point map 194 as an example. That is, in the intersection point map 194, each region r corresponds to each estimated position C. In the example illustrated in FIG. 18A, the region r is illustrated as a substantially circular shape having predetermined dimensions. However, in the intersection point map 194, the shape of the region r is not limited to a substantially circular shape, and may be a rectangle (including a substantially rectangular shape), a polygon (including a substantially polygonal shape), or any other shape. Furthermore, the dimensions of the region r are not particularly limited and may be set arbitrarily. In the example illustrated in FIG. 18A, the regions r are spaced apart from each other. However, in the intersection point map 194, the regions r may be adjacent to each other.

The intersection point map 194 can be generated based on various information about the rebar. For example, the intersection point map 194 may be generated based on information regarding the pitch between each rebar and information regarding the number of estimated positions. The information regarding the pitch between each rebar and the information regarding the number of estimated positions may each be information input by a user, may be stored in the memory apparatus 190, or may be obtained from an external information processing apparatus via communication. In addition, the information regarding the pitch may be, for example, a value (for example, a value obtained by dividing the overall dimensions by the number of rebars) calculated based on the number of rebars and the overall dimensions of the region in which the rebars are arranged. Furthermore, the information regarding the number of estimated positions may be, for example, a value (for example, the product of the number of first rebars and the number of second rebars) calculated from the number of first rebars and the number of second rebars.

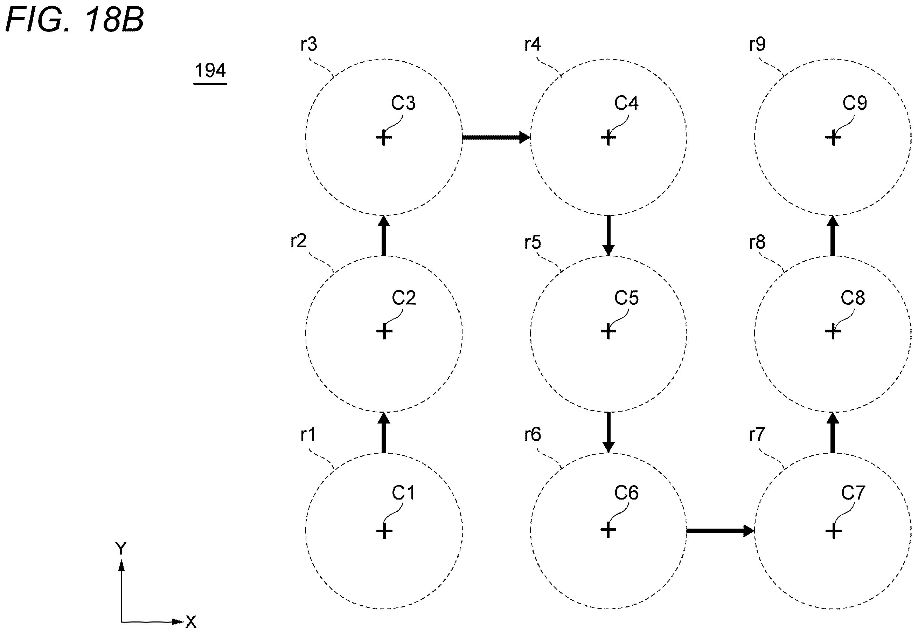

Next, a travel route is generated based on the intersection point map 194 (S1704). FIG. 18B is a schematic diagram illustrating an example of the travel route. The travel route may be a route that passes through at least one of the plurality of regions included in the intersection point map 194. Here, "passing through a region" means that, for example, at least a part of the travel route is included in the region, and does not necessarily have to pass through a center of the region or an estimated position included in the region. The travel route may pass through all of the plurality of regions r as long as it passes through at least one of the plurality of regions r, or it does not have to pass through all of the regions. FIG. 18B illustrates an example of the travel route with arrows connecting each region r. That is, FIG. 18B illustrates the travel route that passes through regions r1, r2, r3, r4, r5, r6, r7, r8, and r9 in order.

The method for generating the travel route is not particularly limited, but may be, for example, a method of calculating the travel cost for each envisaged travel route and adopting a travel route (for example, the travel route with the lowest cost) of which the travel cost is lower by a predetermined amount. Here, the cost may be, for example, the sum of the product of the distance of each route forming the travel route and a weighting assigned to the route. The movement cost for the travel route may be calculated arbitrarily, but for example, the weighting that contributes to the movement cost may be different for following movement that follows rebars and lateral movement that changes the spacing between the rebars to be followed. In particular, the weight of the lateral movement may be made larger than the weight of the following movement because the energy required for the lateral movement is relatively high or the time required for the lateral movement is relatively long.

In addition, in a situation where two rebars intersect, it is assumed that the rebar binding robot 100 will move in a manner that follows the upper rebar, or in a manner that follows the lower rebar. In this case, when following the lower rebar, it may be necessary to move so as to climb onto the upper rebar, so in some cases it may be preferable to move to follow the upper rebar. Therefore, in calculating the movement cost, the weight of the movement following the lower rebar may be made larger than the weight of the movement following the upper rebar.

Next, travel along the travel route is started (S1706). Specifically, the rebar binding robot 100 controls the traveling unit 120 so as to travel along the travel route generated in step S1702 based on this travel route, for example. The odometry information calculation section 190 calculates the position and posture of the rebar binding robot 100 as odometry information based on the information obtained from the sensor unit 130 while the rebar binding robot 100 is traveling. This makes it possible to estimate the travel route and the own position of the rebar binding robot 100 on the intersection point map.

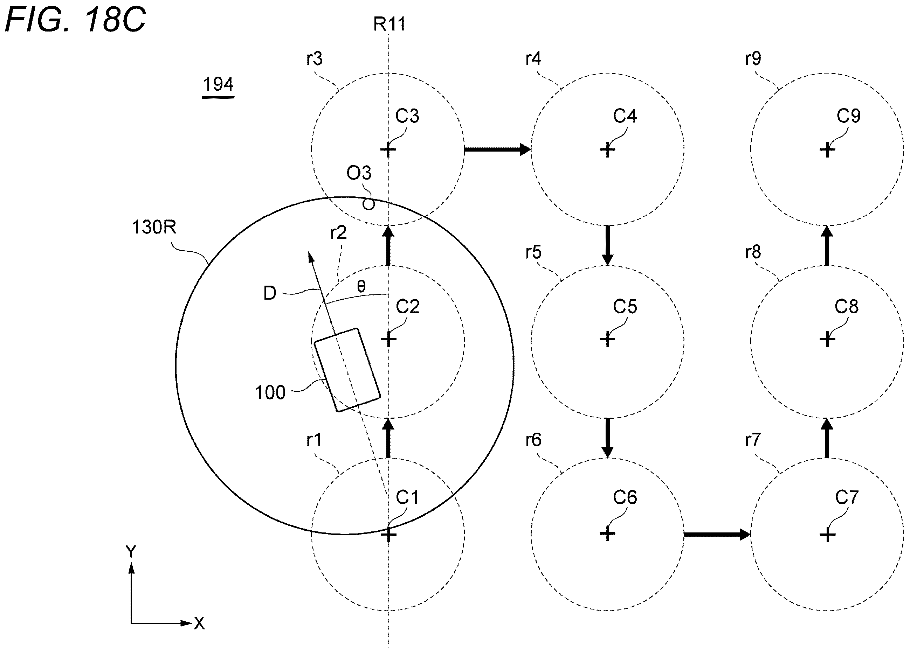

While traveling, the rebar binding robot 100 determines whether the result of obstacle detection via the sensor unit 130 is updated (S1708). FIG. 18C is a diagram for illustrating a manner in which the rebar binding robot detects an obstacle, as an example of a case in which the obstacle detection result is updated. FIG. 18C illustrates the rebar binding robot 100 in traveling and an obstacle O3. A reference symbol 130R indicates a detection range of the sensor unit 130. In FIG. 18C, the detection range 130R is illustrated as a circle, however, this is merely an example and the shape and dimensions of the detection range are not particularly limited. The rebar binding robot 100 detects the obstacle O3 via the sensor unit 130, for example.

The rebar binding robot 100 may determine whether the detected obstacle O3 is included in any of the regions r included in the intersection point map 194. In this determination process, for example, an angle θ (see FIG. 18C) between a direction D of the rebar binding robot 100 contained in the odometry information and a direction of the first rebar R11 may be calculated, and then it may be determined in which region r the obstacle is included. This process makes it possible to determine in which direction the obstacle is located relative to the direction D of the rebar binding robot 100, and therefore makes it possible to determine in which region r the obstacle is included. In the example illustrated in FIG. 18C, the obstacle O3 is determined to be included in the region r3.

When it is determined that an obstacle is detected, the process returns to step S1704, and the rebar binding robot 100 generates (updates) a travel route. In this case, the rebar binding robot 100 may generate (update) a travel route so as not to include the region r that includes the obstacle. In the example illustrated in FIG. 18C, the rebar binding robot 100 may generate (update) a travel route so as not to include the region r3 that includes the obstacle O3.

As another example of a case in which the obstacle detection result is updated, when an obstacle that had been detected in the previous processing of step S1704 is no longer detected in the second processing of step S1704, the rebar binding robot 100 may generate (update) a travel route to include the region r that was not included in the travel route because it includes the obstacle.

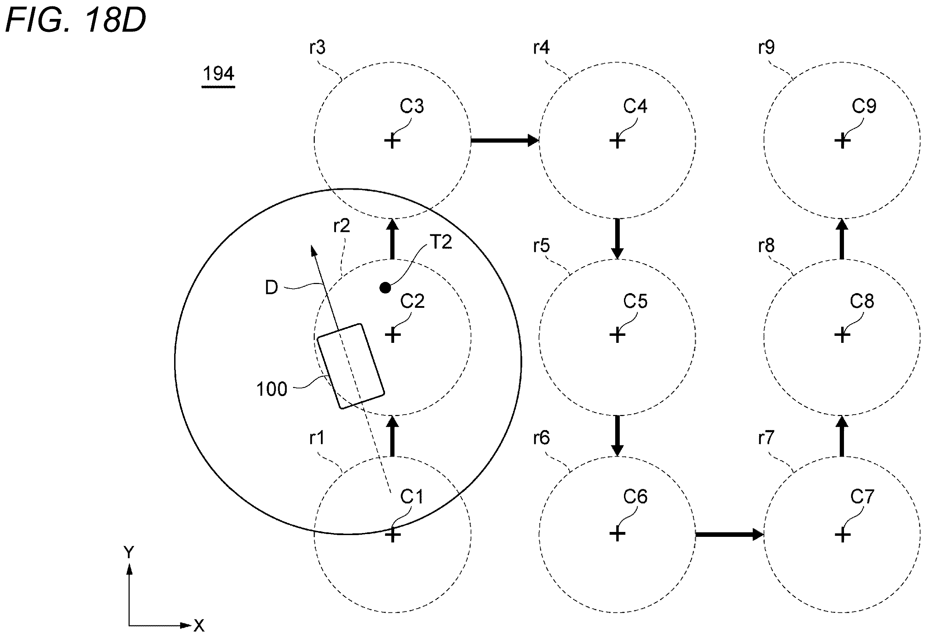

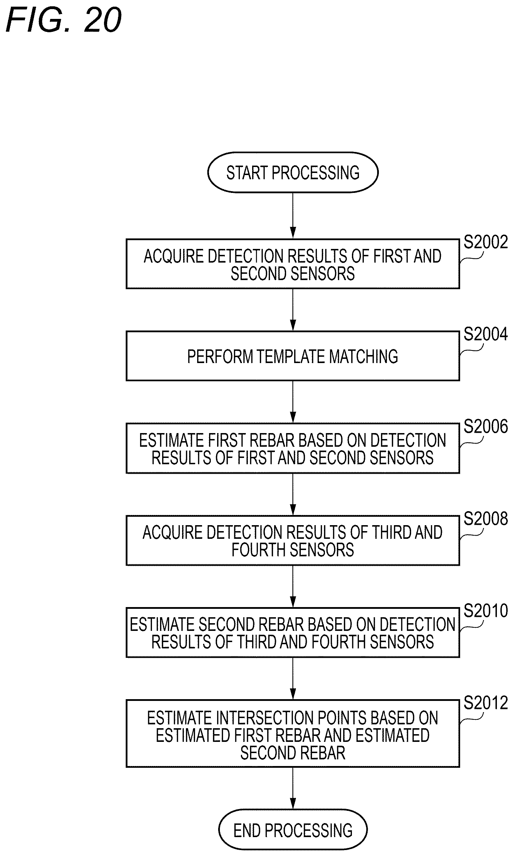

While traveling, the rebar binding robot 100 determines whether an intersection point is detected via the sensor unit 130 (S1710). The rebar binding robot 100 detects the intersection points by using, for example, the process illustrated in FIG. 20 and a method for estimating the intersection points, which will be described below. FIG. 18D is a diagram for illustrating the manner in which the rebar binding robot 100 detects an intersection point. FIG. 18D illustrates the rebar binding robot 100 in traveling and an intersection point T2. FIG. 18D illustrates an example in which the intersection point T2 is detected.

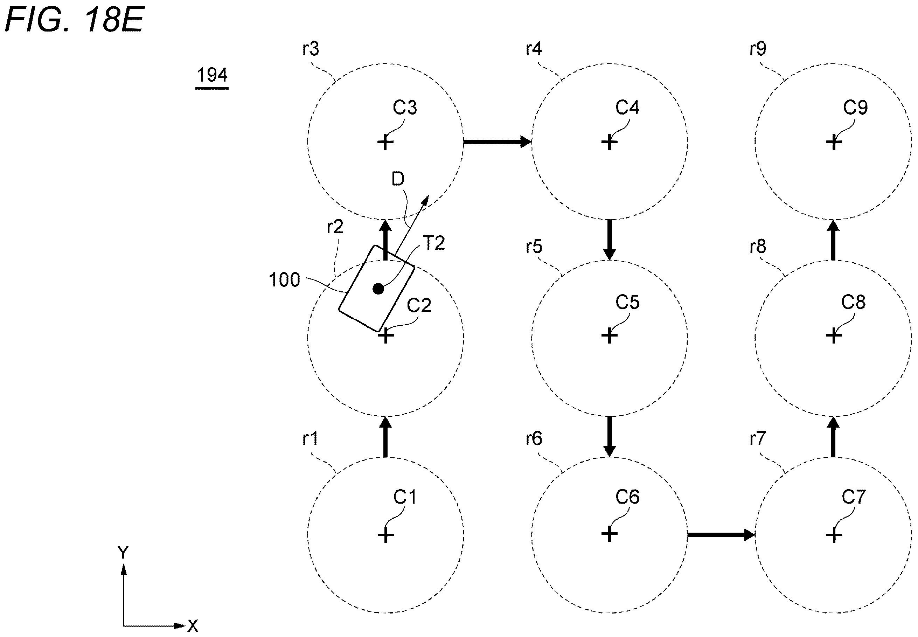

Next, the rebar binding robot 100 travels to the detected intersection point (S1712). For example, as illustrated in FIG. 18E, the rebar binding robot 100 controls the traveling unit 120 to travel to the intersection point T2 detected by the sensor unit 130. The rebar binding robot 100 travels, for example, to the intersection point T2 so that the rebar binding unit 110 is positioned above the intersection point c12.

Next, the intersection point is bound (S1714). For example, the rebar binding robot 100 controls the rebar binding unit 110 to bind the intersection point T2.

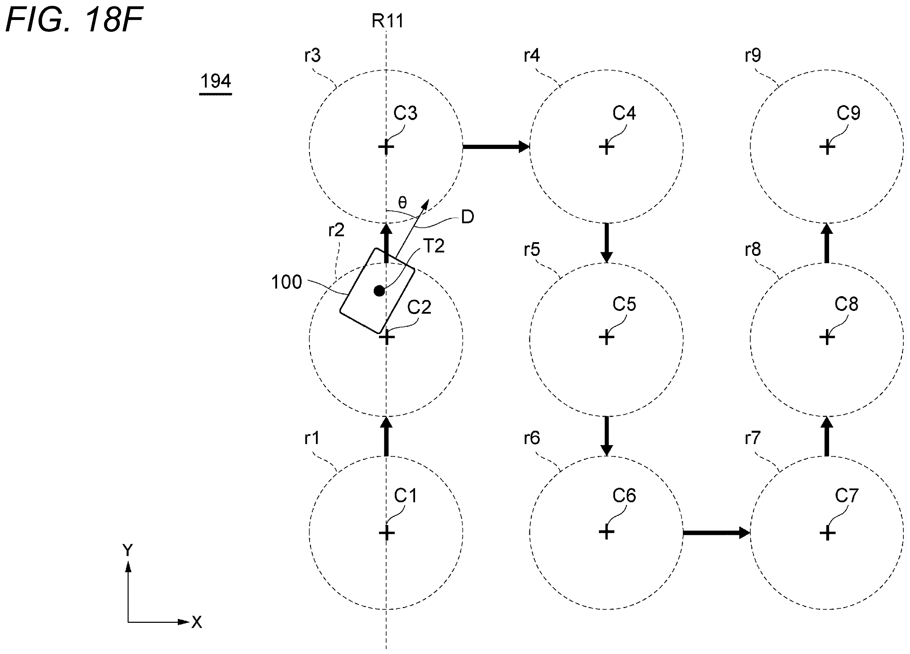

Next, it is determined in which region of the intersection point map the detected intersection point is included (S1716). In an example illustrated in FIG. 18E, the rebar binding robot 100 determines in which region r included in the intersection point map 194 the detected intersection point T2 is included. In this determination process, for example, an angle θ (see FIG. 18F) between the direction D of the rebar binding robot 100 contained in the odometry information and the direction of the first rebar R11 may be calculated, and then it may be determined in which region r the intersection point T2 is included. This process makes it possible to determine in which direction the intersection point T2 is located relative to the direction D of the rebar binding robot 100, and therefore makes it possible to determine in which region r the intersection point T2 is included. In the example illustrated in FIG. 18E, the intersection point T2 is determined to be included in the region r2.

Next, it is determined whether the determined region r is an end position of the travel route (S1718). When it is determined that the determined region r is not the end position of the travel route, the process returns to step S1706. When it is determined that the determined region r is the end position of the travel route, the process ends.

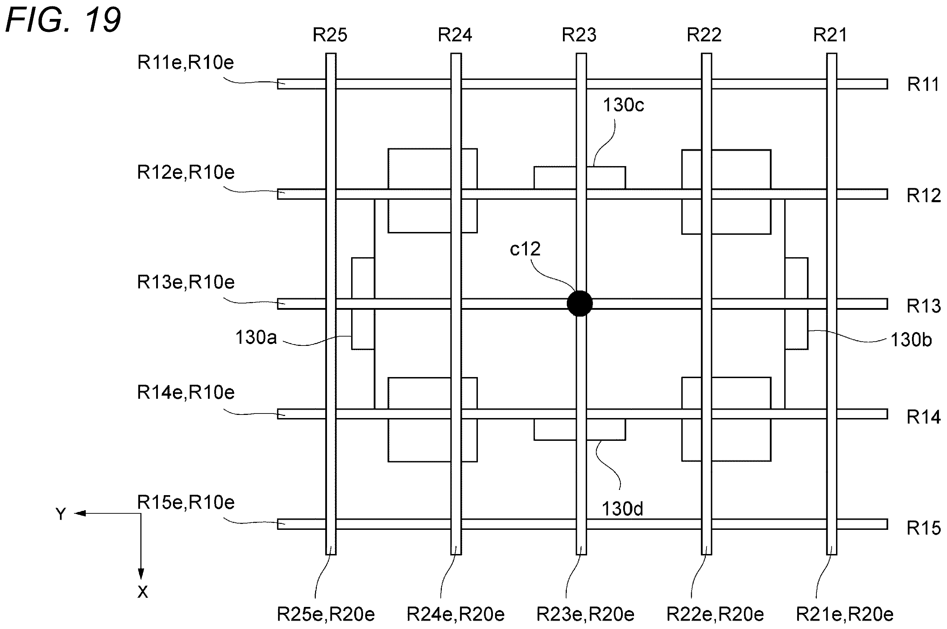

Referring to FIG. 19, a method for estimating the intersection point of the first rebar R10 and the second rebar R20 will be described. FIG. 19 is a schematic diagram of the rebar binding robot 100 as viewed from below in the Z-direction (-Z-direction) illustrating the method for estimating the intersection point. As illustrated in FIG. 19, for example, in the embodiment of the present disclosure, the rebar binding robot 100 is configured to travel on two first rebars R12 and R14, as described above, with the first sensor 130a and the second sensor 130b detecting the first rebar R13, and the third sensor 130c and the fourth sensor 130d detecting the second rebar R20. In the example illustrated in FIG. 17, the third sensor 130c and the fourth sensor 130d detect, for example, the second rebar R23. In this case, based on the detection results of the first sensor 130a and the second sensor 130b, the first rebar R13 extending between the first sensor 130a and the second sensor 130b is estimated, and based on the detection results of the third sensor 130c and the fourth sensor 130d, a second rebar R23 extending between the third sensor 130c and the fourth sensor 130d is estimated. A point where the estimated first rebar R13 extending between the first sensor 130a and the second sensor 130b intersects with the second rebar R23 extending between the third sensor 130c and the fourth sensor 130d is estimated to be the intersection point c12.

A method for estimating the intersection point c12 in the embodiment of the present disclosure will be described with reference to FIG. 20. FIG. 20 is a flowchart of the method for estimating the intersection point c12 in the embodiment of the present disclosure. This process is executed, for example, in step S1710 described above.

First, the detection results of the first sensor 130a and the second sensor 130b are acquired (S2002).

Next, based on the detection results of the first sensor 130a and the second sensor 130b, template matching is performed to confirm the first rebar R10 and/or the second rebar R20 detected by the first sensor 130a and the second sensor 130b (S2004).

The position of the first rebar R13 is estimated based on the detection results of the first sensor 130a and the second sensor 130b (S2006).

Next, the detection results of the third sensor 130c and the fourth sensor 130d are acquired (S2008).

Next, the position of the second rebar R20 is estimated based on the detection results of the third sensor 130c and the fourth sensor 130d (S2010).

Next, the intersection point is estimated based on the estimated position of the first rebar R13 and the estimated position of the second rebar R20 (S2012).

In this manner, the rebar binding robot 100 according to the embodiment of the present disclosure is arranged on the rebar group R so that the third direction (Y-direction) in which the first sensor 130a and the second sensor 130b are arranged is parallel to the first direction in which the first rebar R10 extends, and the fourth direction in which the third sensor 130c and the fourth sensor 130d are arranged is parallel to the second direction in which the second rebar R20 extends, and is provided with the intersection point calculation section 166 which is an intersection point estimation unit that estimates the intersection point c12, and the first sensor 130a and the second sensor 130b are configured to be capable of detecting the first rebar R10. The third sensor 130c and the fourth sensor 130d are configured to be capable of detecting the second rebar R20. Also, the intersection point calculation section 166, which is the intersection point estimation section, may be configured to estimate the position of the first rebar R10 (first rebar R13) detected by both the first sensor 130a and the second sensor 130b based on the detection results of the first sensor 130a and the second sensor 130b, and to estimate the position of the second rebar R20 (second rebar R23) detected by both the third sensor 130c and the fourth sensor 130d based on the detection results of the third sensor 130c and the fourth sensor 130d, and to estimate an intersection point between the first rebar R13 detected by the first sensor 130a and the second sensor 130b and the second rebar R23 detected by the third sensor 130c and the fourth sensor 130d as the intersection point c12.

When the rebar binding robot 100 calculates the position of the intersection point c12 of the first rebar R10 and the second rebar R20 on the first rebar R13, for example, the first sensor 130a may have passed through the point (intersection portion cp12) of intersection. In this case, for example, the calculated position of the intersection point c12 may be adjusted based on information about the intersection portion cp12 imaged by the first sensor 130a. That is, the rebar binding robot 100 may be configured so that the first sensor 130a and the second sensor 130b proceed in the first direction (Y-direction) while detecting the first rebar R10, and when the first sensor 130a detects an intersection portion cp12 where the first rebar R10 intersects the second rebar R20 while the rebar binding robot 100 is advancing, it determines whether the intersection portion cp12 coincides with the estimated intersection point c12, and when the intersection portion cp12 and the estimated intersection point c12 do not coincide, it may be configured to adjust the position of the estimated intersection point c12. When the position of the detected intersection portion cp12 does not match the position of the estimated intersection point c12, the position of the rebar binding robot 100 may be adjusted, for example, by accelerating or decelerating the first traveling unit 121a, the second traveling unit 121b, the third traveling unit 121c, and/or the fourth traveling unit 121d of the traveling unit 121, respectively, in a manner similar to that described above regarding the method of making the rebar binding robot 100 follow the first rebar R10, or by controlling the rotation speeds of the first wheel drive motor 124a, the second wheel drive motor 124b, the third wheel drive motor 124c, and the fourth wheel drive motor 124d.

The method for estimating the intersection point described above with reference to FIG. 20 is merely an example, and is not limited to the above example. For example, the detection results obtained by each sensor do not have to be obtained in the above-described order, and the estimation of the position of the rebar based on the detection results does not have to be performed in the above-described order.

Next, a method for calculating an amount of movement of the rebar binding robot 100 in the embodiment of the present disclosure will be described. Referring to FIG. 19, an example will be described in which the rebar binding robot 100 reaches a vicinity of the Y-direction end R10e of the first rebar R10 and moves laterally (in the X-direction). As illustrated in FIG. 19, the rebar binding robot 100 travels over the first rebar R12 and the first rebar R14, and binds the points where the first rebar R13 located between the first rebar R12 and the first rebar R14 intersects the second rebars R20 (for example, second rebars R21, R22, R23, R24, and R25), reaching the vicinity of end R12e, end R13e, and end R14e. In this case, the rebar binding robot 100 will next perform the binding work on the first rebar R14, which is the rebar adjacent to the first rebar R13 in the X-direction (+X-direction) on which the rebar binding robot 100 has performed the binding work, and therefore moves in the X-direction (+X-direction, a direction from the first rebar R13 to the first rebar R14).

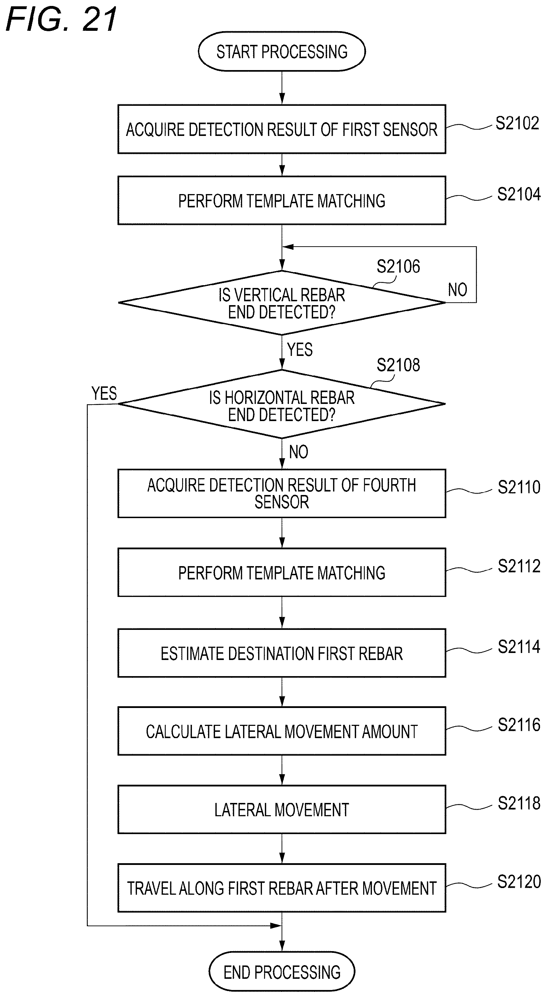

A method of lateral movement of the rebar binding robot 100 in this case will be described with reference to FIG. 21. FIG. 21 is a flowchart regarding the lateral movement of the rebar binding robot 100.

First, the detection result of the first sensor 130a is acquired (S2102).

Next, template matching is performed on the detection result of the first sensor 130a (S2104).

Next, based on the result of template matching, it is determined whether the end R13e of the first rebar R13 detected by the first sensor 130a is detected (S2106).

Next, it is determined whether the end R20e of the second rebar R20 is detected (S2108). As the end R20e of the second rebar R20, for example, as illustrated in FIG. 19, it may be determined whether any of the ends R21e, R22e, R23e, R24e, and R25e of the second rebars R21, R22, R23, R24, and R25 is detected.

For example, it may be determined whether the end R20e of the second rebar R20 is detected based on the detection results of the third sensor 130c and/or the fourth sensor 130d. In the embodiment of the present disclosure, the rebar binding robot 100 performs binding work at the intersection point of the first rebar R10 and the second rebar R20, from the first rebar R10 on a left side of the X-axis to the first rebar R10 on a right side of the X-axis, when viewed from above in the Z-axis direction. Therefore, it may be possible to determine whether the end R20e of the second rebar R20 on a right side in the X-direction is detected based on the detection result of the fourth sensor 130d provided on the right side in the X-direction when viewed from above in the Z-direction. For example, when the fourth sensor 130d detects the end R20e of the second rebar R20 on the right side in the X-direction, it is possible that the binding work of the last first rebar R10 is completed, so the binding work of the rebar group R that is a work target may be terminated.

The detection of the end R20e is not limited thereto and may be determined, for example, based on the detection results of other sensors. When binding work is performed from the first rebar R10 on the right side in the X-direction to the first rebar R10 on the left side in the X-direction, the end R20e of the second rebar R20 on the left side in the X-direction may be detected by the third sensor 130c. It is also possible to configure the binding work to be terminated based on a condition other than the detection of the end R20e. For example, it is possible to configure the rebar binding robot 100 to move by setting conditions to start binding work on another rebar at a location other than the end R20e, or to change the binding position when a factor such as a foreign object is detected, and to move the rebar binding robot 100 to a different rebar for which binding work is to be performed. In addition, it is also possible for the first sensor 130a and/or the second sensor 130b to detect the second rebar R20 by adjusting, for example, the placement location, inclination, angle of view, or the like, so that detection of the end R20e of the second rebar R20 may be performed using the detection results of the first sensor 130a and/or the second sensor 130b.

Next, the detection result of the fourth sensor 130d is acquired (S2110).

Next, template matching is performed based on the detection result of the fourth sensor 130d (S2112).

Next, based on the position of the first rebar R10 detected by the fourth sensor 130d, a destination first rebar R10 of the rebar binding robot 100 is estimated (S2114). In the embodiment of the present disclosure, the fourth sensor 130d detects a plurality of first rebars R10. For example, in the example illustrated in FIG. 19, the fourth sensor 130d may detect a first rebar R14 located on the right side of the rebar binding robot 100 in the X-direction. In addition, since the binding work has been performed at the intersection points c12 of the first rebar R10 and the second rebars R20 along the first rebar R13, when next performing the binding work at the intersection points along the first rebar R14, the rebar binding robot 100 moves laterally, for example, to travel over the first rebar R13 and the first rebar R15. For example, lateral movement may be performed to move the rebar binding robot 100 in the X-direction so that the first traveling unit 121a and the third traveling unit 121c travel on the first rebar R13, and the second traveling unit 121b and the fourth traveling unit 121d travel on the first rebar R15.

Next, a lateral movement amount is calculated (S2116). The lateral movement amount of the rebar binding robot 100 may be calculated by the following method. For example, as described above, when the rebar binding robot 100 moves to the right in the X-direction (+X-direction) when viewed from above in the Z-direction, that is, when it moves in the direction where the fourth sensor 130d is located, the lateral movement amount of the rebar binding robot 100 may be calculated based on two pieces of information: how far the fourth sensor 130d is in the X-direction from a center of the rebar binding robot 100 in the X-direction, and how far the first rebar R14 detected by the fourth sensor 130d is from the fourth sensor 130d.

When calculating how far the fourth sensor 130d is from the X-direction center of the rebar binding robot 100 in the X-direction, the center of the rebar binding robot 100 in the X-direction may be, for example, a position where the rebar binding unit 110 is located. Alternatively, the binding position of the rebar binding unit 110 may be regarded as the center of the rebar binding robot 100 in the X-direction. In this case, for example, the X-direction position of the first rebar R13, which is a target of the rebar binding robot 100 performing the binding work, may be determined to be the center position of the rebar binding robot 100 in the X-direction. In addition, the center position of the rebar binding robot 100 in the X-direction and a distance (distance in the X-direction) of the fourth sensor 130d from the center position of the rebar binding robot 100 in the X-direction may be calculated in advance and stored in the memory apparatus 198. In addition, in a configuration in which the position of the sensor unit 130 can be changed, for example, when the position of the fourth sensor 130d is changed depending on a construction site or the like, the direction and amount in which the fourth sensor 130d has been moved can be calculated, and the distance in the X-direction of the fourth sensor 130d from the center of the rebar binding robot 100 in the X-direction can be calculated taking into account the amount of movement of the fourth sensor 130d. Furthermore, the distance between the fourth sensor 130d and the first rebar R14 detected by the fourth sensor 130d may be calculated, for example, based on an image captured by the fourth sensor 130d.

For example, when the fourth sensor 130d is attached at a position 100 away in the X-direction from the center (for example, the position of the first rebar R13) of the rebar binding robot 100 in the X-direction, and the first rebar R14 is at a position 20 away from the fourth sensor 130d in a direction away from the center of the rebar binding robot 100 in the X-direction, the interval (the interval between the first rebar R13 and the first rebar R14) of the first rebar R10 may be calculated to be 121, and control may be performed to set the lateral movement amount to 121. For example, when the fourth sensor 130d is attached at a position 20 cm away in the X-direction from the center (for example, the position of the first rebar R13) of the rebar binding robot 100 in the X-direction, and the first rebar R14 is located 4 cm away from the fourth sensor 130d in a direction away from the center of the rebar binding robot 100 in the X-direction, the interval (the interval between the first rebar R13 and the first rebar R14) of the first rebar R10 may be calculated to be 24 cm, and control may be performed to set the lateral movement amount to 24 cm. In addition, when the fourth sensor 130d is attached at a position 20 cm away in the X-direction from the center (for example, the position of the first rebar R13) of the rebar binding robot 100 in the X-direction, and the first rebar R14 is located 4 cm closer to the center of the rebar binding robot 100 in the X-direction from the fourth sensor 130d, the interval (the interval between the first rebar R13 and the first rebar R14) of the first rebar R10 may be calculated to be 16 cm, and control may be performed to set the lateral movement amount to 16 cm.

The lateral movement amount of the rebar binding robot 100 may be calculated so that, for example, as described above, when the rebar binding robot 100 is moved laterally next to bind the intersection points on the first rebar R14, the rebar binding robot 100 performs a lateral movement by the lateral movement amount that is equivalent to the overall interval between adjacent first rebars R10. In the above-described example, the first traveling unit 121a and the third traveling unit 121c move from the first rebar R12 to the first rebar R13, and the second traveling unit 121b and the fourth traveling unit 121d move from the first rebar R14 to the first rebar R15. In the embodiment of the present disclosure, the first rebars R10 are arranged at approximately equal intervals and approximately parallel to one another, so that the first traveling unit 121a to the fourth traveling unit 121d move by the same amount in the X-direction. Therefore, the lateral movement amount may be, for example, the interval in the X-direction between the first rebar R14 and the first rebar R15 detected by the fourth sensor 130d. Alternatively, since the interval between the first rebars R10 is approximately equal, the lateral movement amount may be calculated based on the interval between adjacent first rebars R10 calculated based on the detection results from another sensor. In addition, distances in the X-direction between a plurality of (for example, three or more) first rebars R10 may be calculated, an average value of the calculated distances in the X-direction between the plurality of first rebars R10 may be calculated, and the average value of the interval between the first rebars R10 may be used as the lateral movement amount. By calculating the average value, even when there is an error in the interval between the first rebars R10, the effect of the error on the calculated lateral movement amount can be reduced.

Next, the rebar binding robot 100 is moved laterally based on the calculated lateral movement amount (S2118).

After completing its lateral movement, the rebar binding robot 100 may, for example, move along the first rebar R13 and the first rebar R15 where the first traveling unit 121a to the fourth traveling unit 121d are located after the movement (S2120), and begin binding work at the intersection points c12 on the first rebar R14.

The detection of the end R10e of the first rebar R10 described above may be performed, for example, by preparing a template corresponding to an image of the end R10e and determining the degree of matching of the end R10e with the template. For example, when preparing a template image extended in one direction for a portion other than the end R10e as illustrated with reference to FIG. 16, a template image may be prepared for the end R10e in which a length in the Y-direction of a portion corresponding to the rebar is shorter than that of the portion other than the end R10e.

Alternatively, it may be determined that the end R10e is being reached when the matching degree is within a certain range of values. For example, in the portion other than the end R10e of the first rebar R10, when the matching degree is relatively close to 100%, for example, 75% or more, the presence of portion other than the end R10e of the first rebar R10 can be determined, and when the matching degree is relatively low, for example, 50% or more and 75% or less, it can be determined that the rebar binding robot 100 is traveling on a portion of the first rebar R10 close to the end R10e. The matching degree here for the portion other than the end R10e and for the vicinity of the end R10e is merely an example, and other values may be set, or a reference value may be configured to be changeable depending on the arrangement of the rebars and other environments, or the like.

In this way, when the rebar binding robot 100 moves laterally, the detection results of the first rebar R10 by the third sensor 130c and/or the fourth sensor 130d are particularly used. As for the third sensor 130c and the fourth sensor 130d, as described above, for example, when calculating the position of the intersection point c12 of the first rebar R10 and the second rebar R20, the detection results of the position of the second rebar R20 by the third sensor 130c and the fourth sensor 130d are used. In other words, when calculating the position of the intersection point c12 of the first rebar R10 and the second rebar R20, the detection results of the position of the first rebar R10 by the third sensor 130c and the fourth sensor 130d do not need to be used, and in this case the first rebar R10 does not need to be detected by the third sensor 130c and the fourth sensor 130d. When the rebar binding robot 100 progresses with the rebar binding work and reaches the end R10e of the first rebar R10, for example, the rebar binding robot 100 moves laterally, and therefore, an imaging range of the third sensor 130c and/or the fourth sensor 130d may be changed, for example, by changing the orientation of the third sensor 130c and/or the fourth sensor 130d so that the first rebar R10 can be detected by the third sensor 130c and/or the fourth sensor 130d and the amount of movement can be calculated.

Hereinabove, with reference to FIG. 21, an example is described in which the detection results of the first sensor 130a and the fourth sensor 130d are used, but the sensors of which the detection results are referred are not limited thereto, and it is also possible to change which sensor is used depending on the direction in which the rebar binding robot 100 is advancing, for example. As described above, when the end R10e of the first rebar R10 is detected by the first sensor 130a, the rebar binding robot 100 is not limited to during lateral movement in the direction of the fourth sensor 130d. For example, when the end R10e of the first rebar R10 is detected by the first sensor 130a, the rebar binding robot 100 may move laterally in the direction of the third sensor 130c. Also, for example, when the end R10e of the first rebar R10 is detected by the second sensor 130b, the rebar binding robot 100 may move laterally in the direction of the third sensor 130c, or when the end R10e of the first rebar R10 is detected by the second sensor 130b, the rebar binding robot 100 may move laterally in the direction of the fourth sensor 130d.

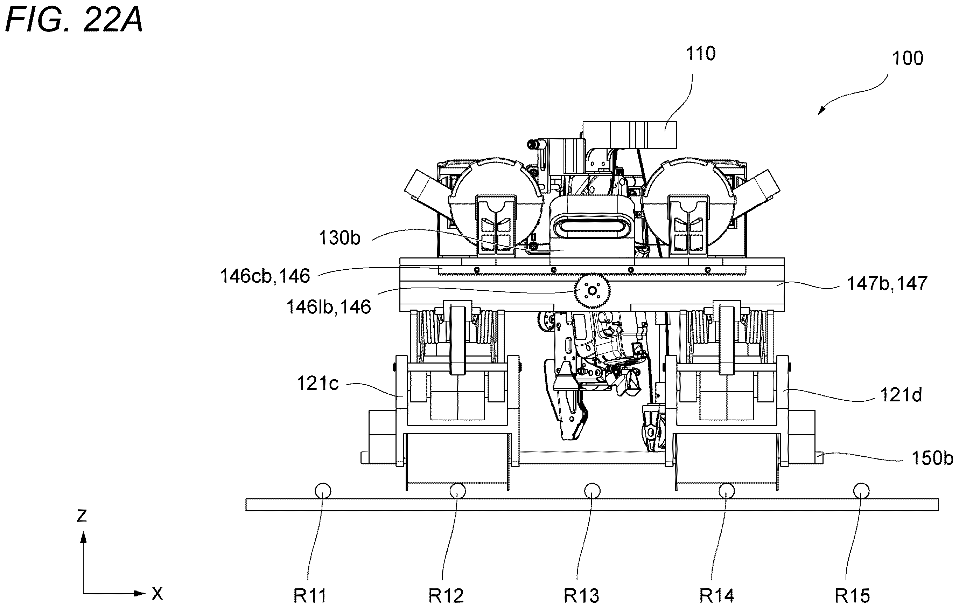

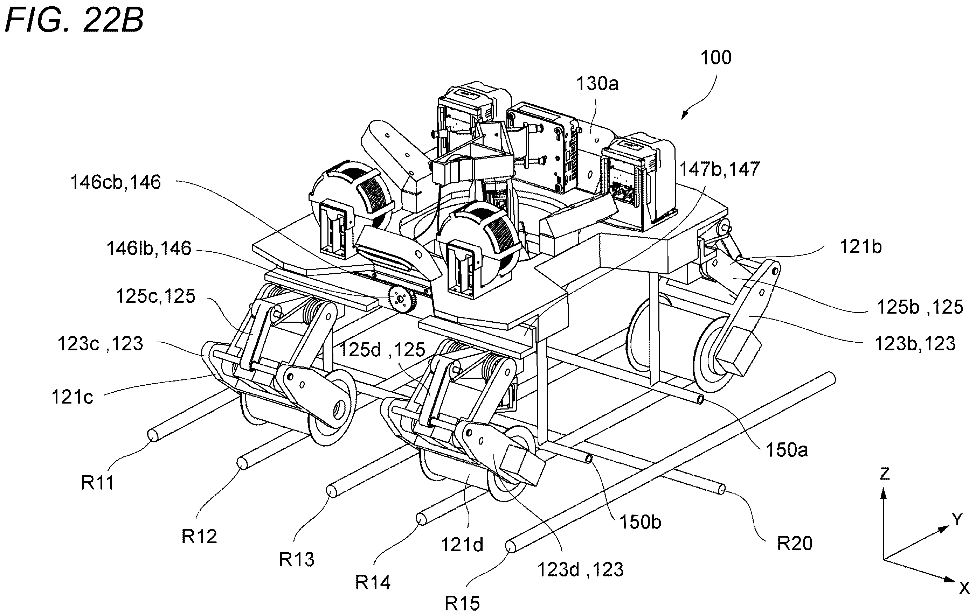

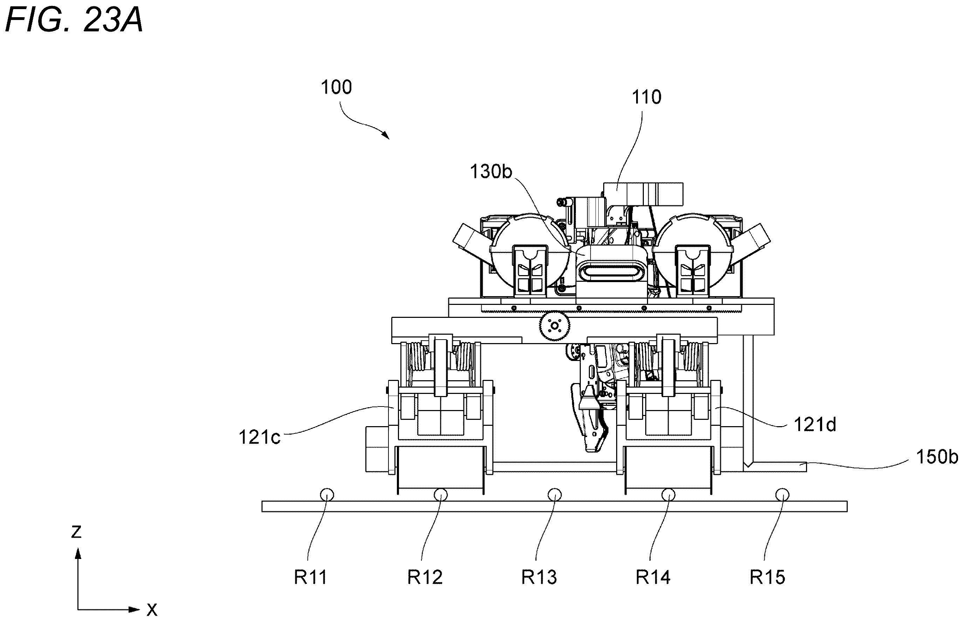

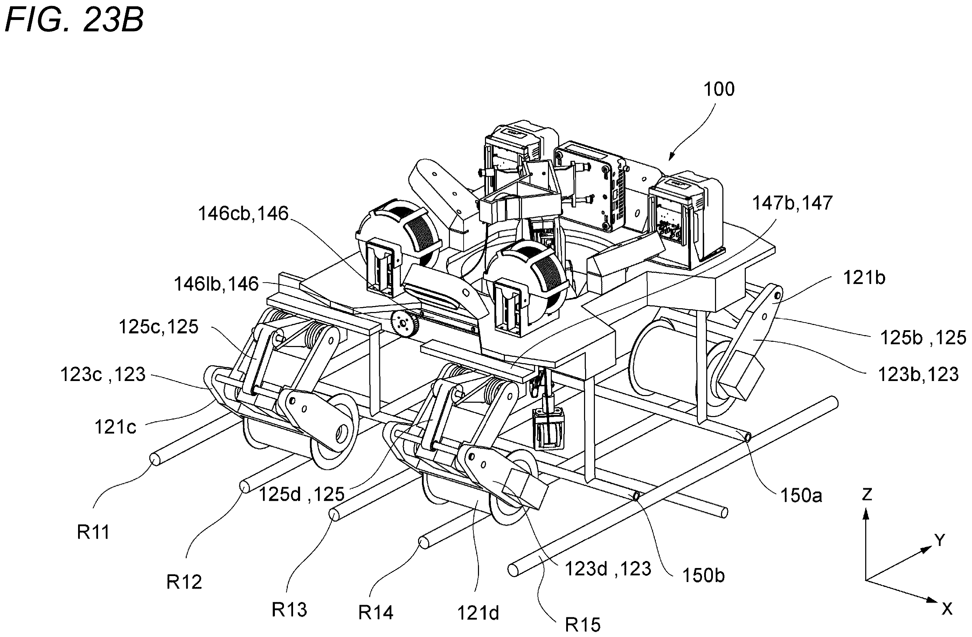

An example of the lateral movement of the rebar binding robot 100 will be described below with reference to FIGS. 22A to 27B. FIGS. 22A to 27B are views of the rebar binding robot 100 during lateral movement, FIGS. 22A, 23A, ..., 27A are views of the rebar binding robot 100 from the rear, and FIGS. 22B, 23B, ..., 27B are views of the rebar binding robot 100 as viewed obliquely from above.

FIGS. 22A and 22B illustrate the rebar binding robot 100 before commencing its lateral movement. As illustrated in FIGS. 22A and 22B, the rebar binding robot 100 travels over the first rebars R12 and R14.

Next, the rebar binding robot 100 starts to move laterally. In the embodiment of the present disclosure, as described above, it is determined that lateral movement begins when, for example, it is determined based on the detection results by the first sensor 130a that the sensor has reached or is approaching the vicinity of the end R10e of the first rebar R10. FIGS. 23A and 23B illustrate a state when the rebar binding robot 100 starts to move laterally. As illustrated in FIGS. 23A and 23B, the rebar binding robot 100 moves in the direction in which the main body unit 140 moves (X-direction) without moving the traveling unit 121. As illustrated in FIGS. 23A and 23B, in this case, the first traveling unit 121a and the second traveling unit 121b are respectively present on the first rebar R12 and the first rebar R14 without moving. In this case, the support bars 150a and 150b are not in contact with any of the rebars. The lateral movement (here, for example, movement in the horizontal direction (movement in the X-direction)) of the main body unit 140 may be performed, for example, by driving the first lateral movement roller 1461a and the second lateral movement roller 1461b provided on the first connecting portion 147a and the second connecting portion 147b by the first lateral movement motor 146ma and the second lateral movement motor 146mb of the lateral movement unit 146 not illustrated in FIGS. 23A and 23B, and moving the main body unit 140 in the X-direction via the first drive rack 146ca and the second drive rack 146cb.

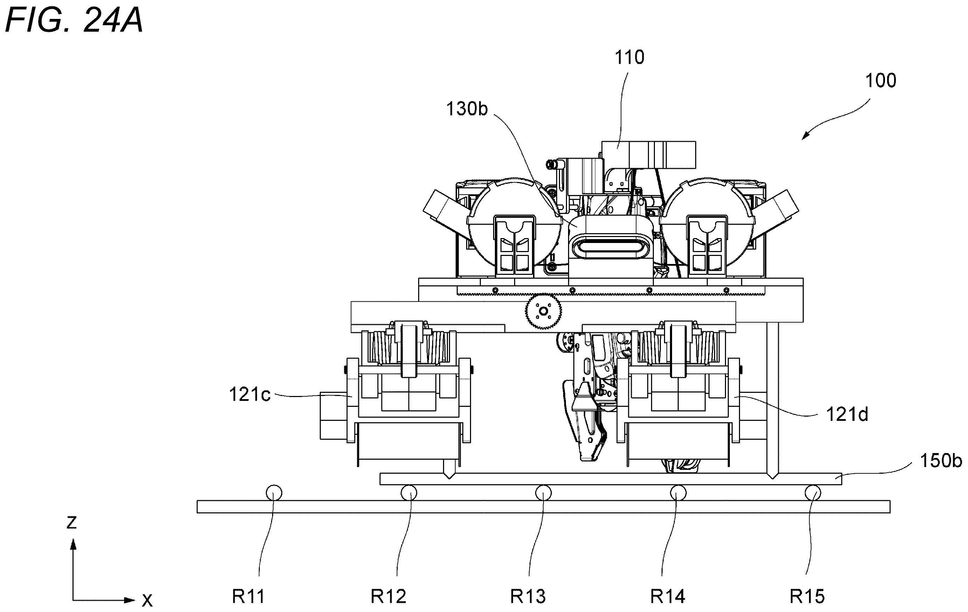

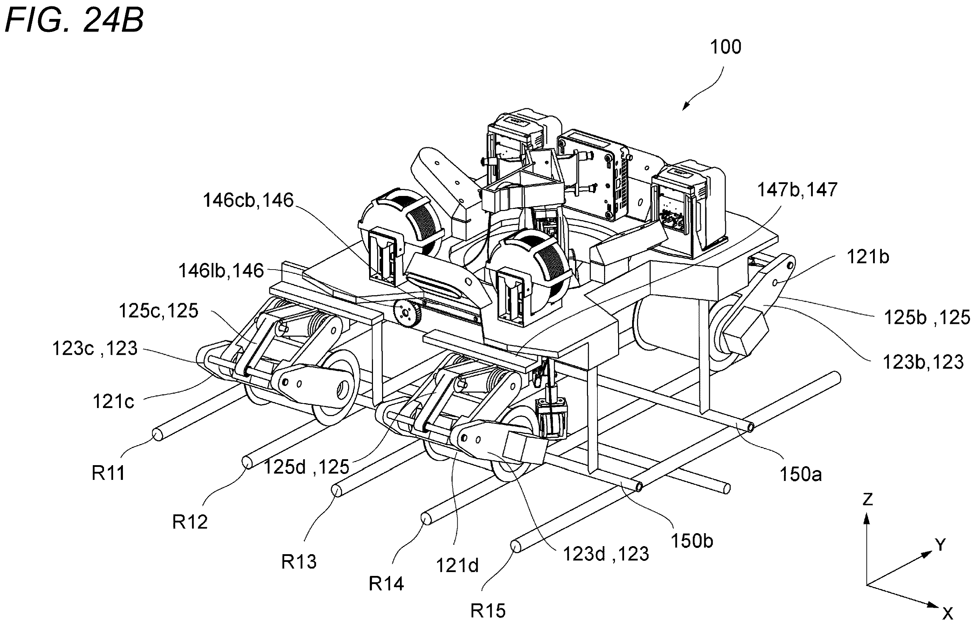

Next, the rebar binding robot 100 moves the traveling unit 121 (lower end of the traveling unit 121) upward relative to the first rebar R10. As illustrated in FIGS. 24A and 24B, the lower end of the traveling unit 121 in the -Z-direction is raised upward in the Z-direction (+Z-direction) in FIGS. 24A and 24B. In this case, for example, the first main body side link portion 125a and the first roller side link portion 123a move relatively closer to each other (that is, the first main body side link portion 125a and the first roller side link portion 123a move closer to each other). That is, the first main body side link portion 125a and the first roller side link portion 123a move so that the angle formed between the first main body side link portion 125a and the first roller side link portion 123a becomes smaller. Similarly, for the second traveling unit 121b, the third traveling unit 121c, and the fourth traveling unit 121d, the second main body side link portion 125b and the second roller side link portion 123b, the third main body side link portion 125c and the first roller side link portion 123c, and the fourth main body side link portion 125d and the fourth roller side link portion 123d respectively move in the closing direction.

When a main body side link portion 125 and a roller side link portion 123 close and the lower end of the traveling unit 121 rises, the support bars 150a and 150b move downward relatively. When the traveling unit 121 moves away from the first rebar R10, the support bars 150a and 150b come into contact with the first rebar R10. For example, the traveling unit 121 may be configured so that its length in the Z-direction can be changed by closing the main body side link portion 125 and the roller side link portion 123 (the first main body side link portion 125a and the first roller side link portion 123a, the second main body side link portion 125b and the second roller side link portion 123b, the third main body side link portion 125c and the third roller side link portion 123c, and the fourth main body side link portion 125d and the fourth roller side link portion 123d) which correspond to a configuration supporting the roller (the first roller portion 122a, the second roller portion 122b, the third roller portion 122c, and the fourth roller portion 122d) using a motor or the like (for example, a first wheel height change motor 126a, a second wheel height change motor 126b, a third wheel height change motor 126c, and a fourth wheel height change motor 126d illustrated in FIG. 7). A roller portion 122 may be raised by closing the main body side link portion 125 and the roller side link portion 123, so that the roller portion 122 moves away from the first rebar R10.

As illustrated in FIGS. 24A and 24B, the support bars 150a and 150b come into contact with, for example, the first rebars R11 to R14. In this manner, the entirety of the rebar binding robot 100 is supported by the support bars 150a and 150b.

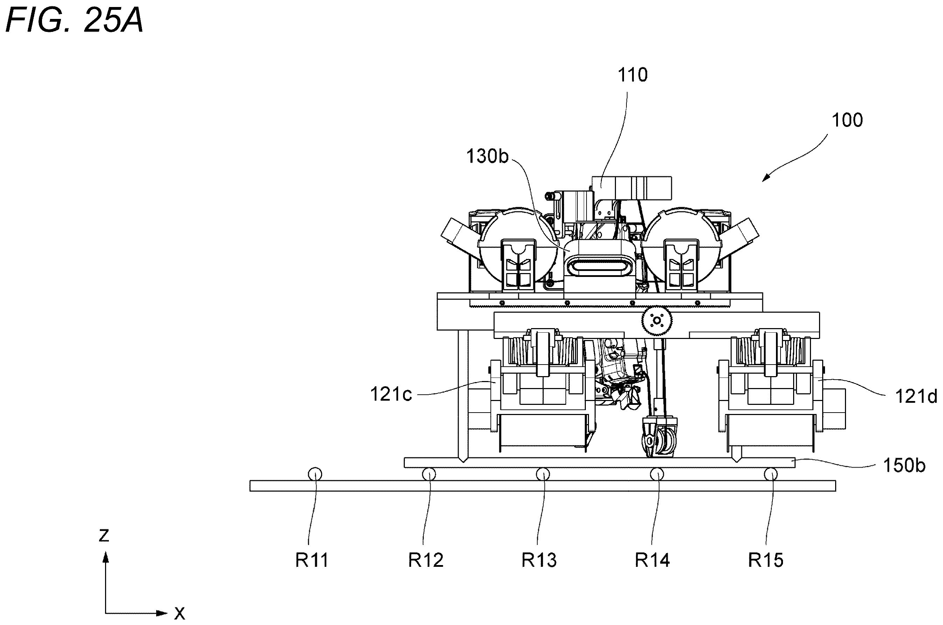

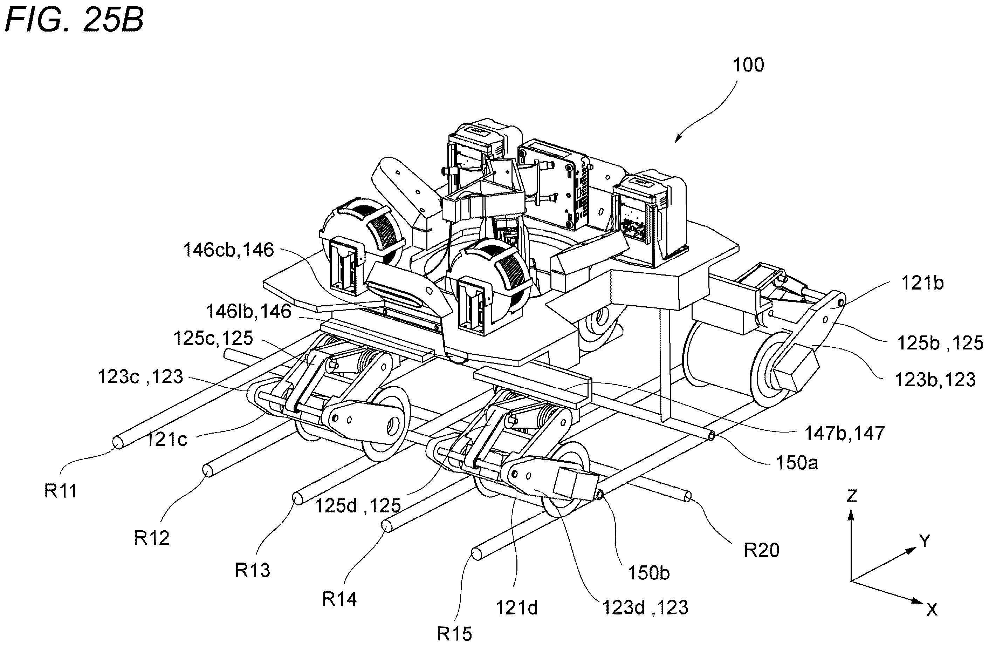

Next, the traveling unit 121 of the rebar binding robot 100 moves in the X-direction. As illustrated in FIGS. 25A and 25B, the first traveling unit 121a and the third traveling unit 121c, and the second traveling unit 121b and the fourth traveling unit 121d, which were respectively in contact with the first rebar R12 and the first rebar R14, are moved above the first rebar R13 and the first rebar R15. In this case, none of the first traveling unit 121a to the fourth traveling unit 121d are in contact with the first rebar R10, and the support bars 150a and 150b are in contact with the first rebar R10 (first rebars R12 to R15) and support the rebar binding robot 100.

Next, the main body side link portion 125 and the roller side link portion 123 of the traveling unit 121 are opened. This causes the lower end of the traveling unit 121 in the -Z-direction to lower relative to the first rebar R10. In this case, for example, the first main body side link portion 125a and the first roller side link portion 123a move relatively away from each other (that is, the first main body side link portion 125a and the first roller side link portion 123a move away from each other). That is, the first main body side link portion 125a and the first roller side link portion 123a move so that the angle formed between the first main body side link portion 125a and the first roller side link portion 123a becomes larger. Similarly, for the second traveling unit 121b, the third traveling unit 121c, and the fourth traveling unit 121d, the second main body side link portion 125b and the second roller side link portion 123b, the third main body side link portion 125c and the first roller side link portion 123c, and the fourth main body side link portion 125d and the fourth roller side link portion 123d respectively move in a direction away from each other.

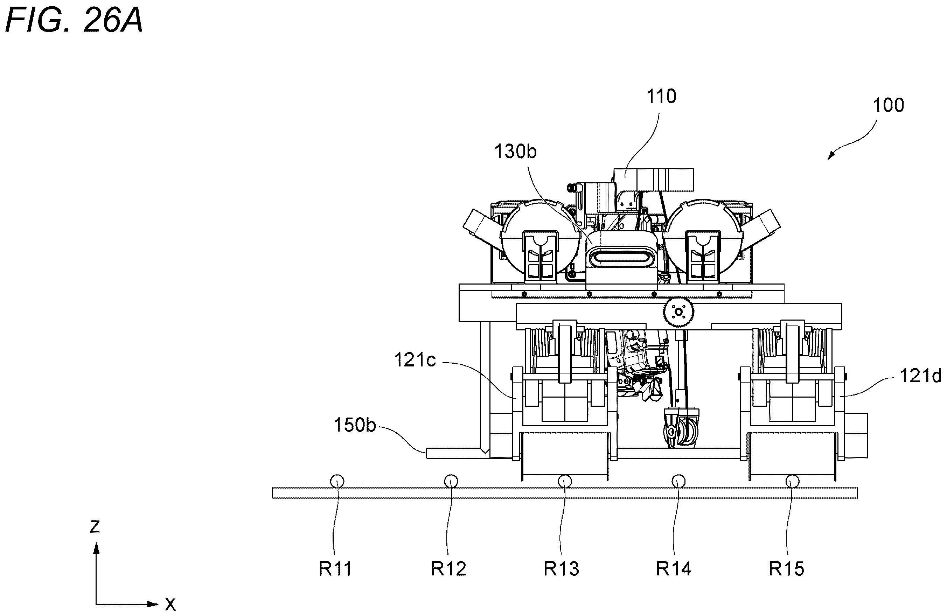

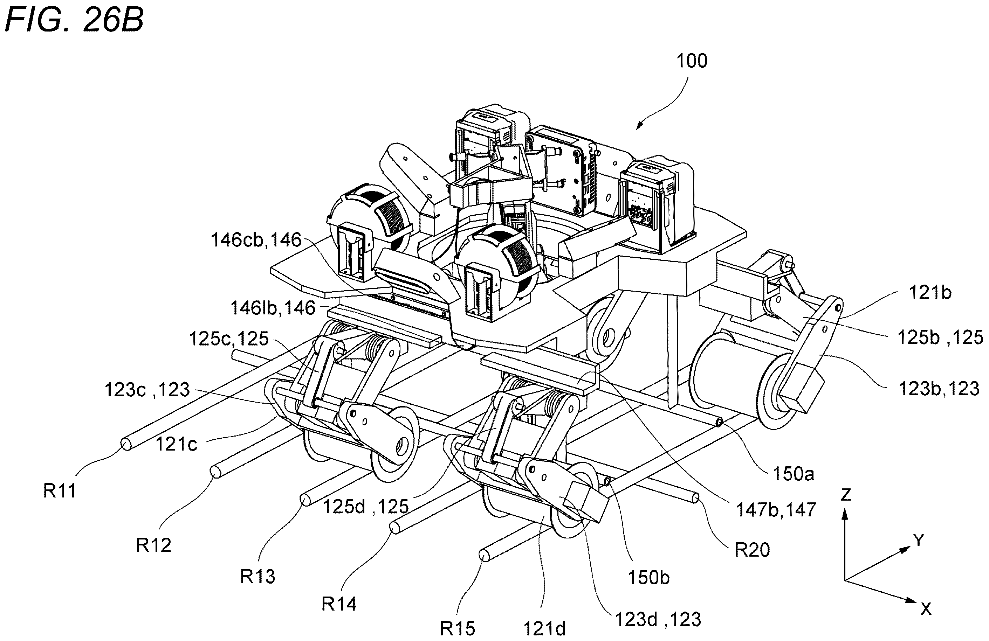

As illustrated in FIGS. 26A and 26B, the lower end of the traveling unit 121 in the -Z-direction is lowered downward in the Z-direction (-Z-direction) in FIGS. 26A and 26B. As illustrated in FIGS. 26A and 26B, the first traveling unit 121a and the third traveling unit 121c come into contact with the first rebar R13, and the second traveling unit 121b and the fourth traveling unit 121d come into contact with the first rebar R15. Therefore, the support bars 150a and 150b rise relative to the first rebar R10. Therefore, in this state, the rebar binding robot 100 is supported by the traveling unit 121.

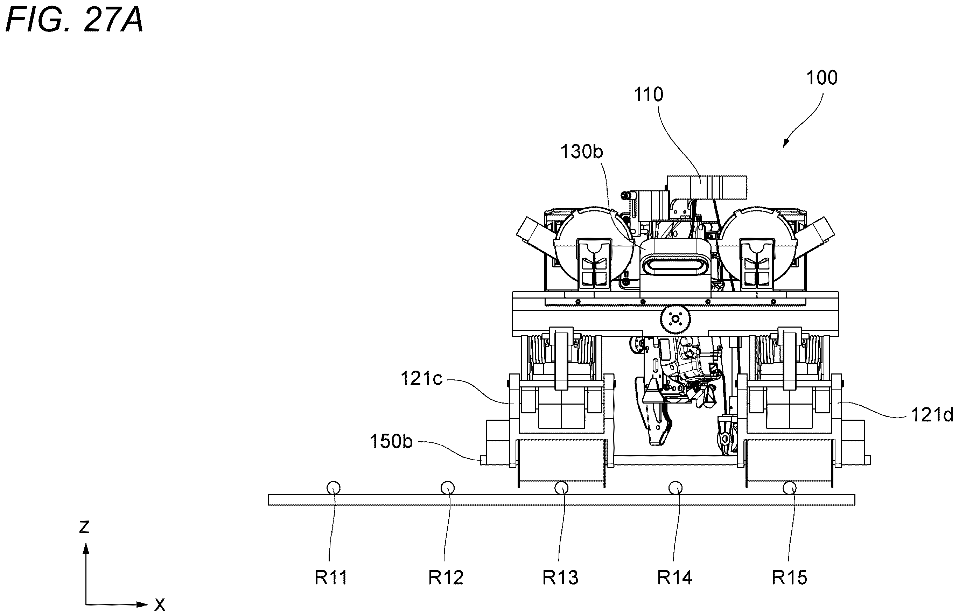

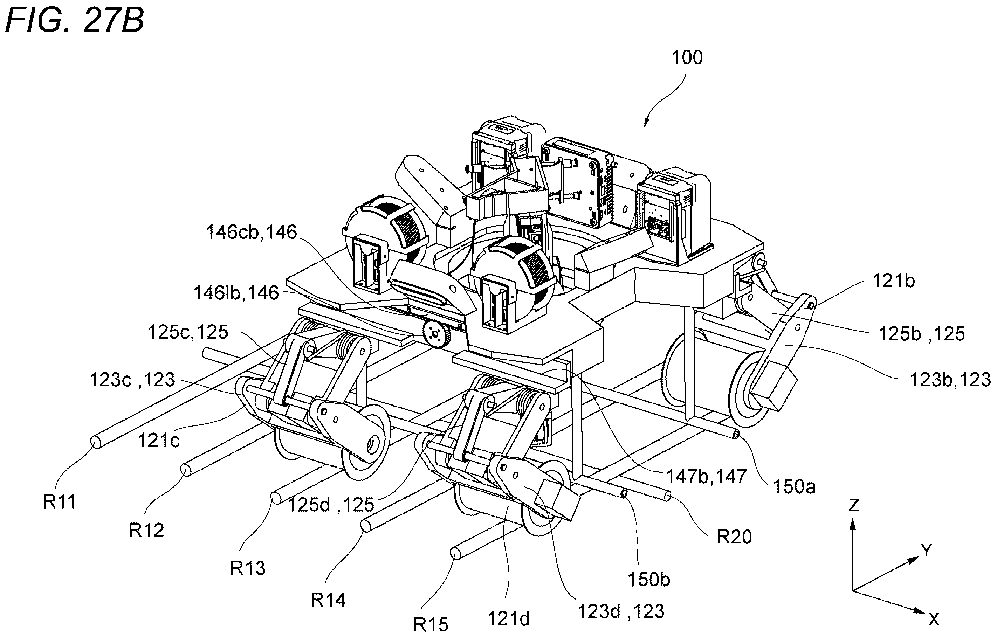

Next, as illustrated in FIGS. 27A and 27B, the main body unit 140 is moved in the X-direction. Similar to what is described above with reference to FIGS. 23A and 23B, the lateral movement (here, for example, movement in the horizontal direction (movement in the X-direction)) of the main body unit 140 illustrated in FIGS. 27A and 27B may be performed, for example, by the first lateral movement motor 146ma and the second lateral movement motor 146mb of the lateral movement unit 146 not illustrated in FIGS. 27A and 27B. In this manner, the lateral movement of the rebar binding robot 100 is completed. The rebar binding robot 100 starts traveling, for example, on the first rebar R13 and the first rebar R15, and performs binding work at the intersection point c12 of the first rebar R10 and the second rebar R20 on the first rebar R14.

The above describes an example in which the rebar binding robot 100 moves from the first rebars R12 and R14 to the first rebars R13 and R15, but it is also possible to move to a destination separated by a plurality of first rebars R10, for example. In this case, movement can be achieved in the same manner as above, or by repeating the above movement method, movement over a longer distance is possible. In addition, when moving to a destination separated by a plurality of first rebars R10, the amount of movement may be calculated based on the detection results of the sensor unit 130 using a similar method.

Furthermore, the rebar binding robot 100 may move laterally by other methods, not limited to the method described above, and in that case as well, it is possible to calculate the amount of movement of the rebar binding robot 100 based on the detection results of the sensor unit 130 in accordance with the movement amount calculation method in the embodiment of the present disclosure, and by using the movement amount calculation method in the embodiment of the present disclosure, it is possible to smoothly move the rebar binding robot 100.

As described above, the rebar binding robot 100 according to the embodiment of the present disclosure includes the traveling unit 121 configured to travel on the rebar group R including a plurality of first rebars R1 of which the extension direction is the first direction (Y-direction) and a plurality of second rebars R2 of which the extension direction is the second direction (X-direction) that intersects the first direction (Y-direction) and that are arranged so as to intersect the first rebars R1, the sensor unit 130 configured to detect at least one first rebar R10 and/or at least one second rebar R20, and the first rebar determination section 164a1 and/or the second rebar determination section 164a2 (also referred to as a "rebar position calculation unit" in the present embodiment) configured to calculate the position of the at least one first rebar R10 and/or at least one second rebar R20 detected by the sensor unit 130 based on the pixel values of a plurality of pixels that form a two-dimensional image generated by the detection result of the sensor unit 130. The rebar binding robot 100 according to the embodiment of the present disclosure can streamline the process of calculating the positions of the first rebar R10 and/or the second rebar R20 by calculating the positions of the first rebar R10 and/or the second rebar R20 based on a two-dimensional image generated by the detection results of the sensor unit 130. Therefore, the efficiency of the rebar detection process in the rebar blood complexion work of the rebar binding robot 100 can be improved. For example, by performing calculations based on two-dimensional images as detection results of the sensor units, a calculation load can be reduced compared to when calculating the position of the rebar using three-dimensional data.

Improvements in the technical level of the various units that make up the rebar binding robot 100 have made it possible to perform rebar binding work faster and more efficiently. In order to speed up rebar binding work, it is desirable to speed up the process of detecting rebars and their intersection points where the rebars are bound together. The rebar binding robot 100 according to the embodiment of the present disclosure can improve the efficiency of the rebar detection process, thereby contributing to speeding up rebar binding work.

In addition, the rebar binding robot 100 according to the embodiment of the present disclosure includes, for example, includes the rebar binding unit 110 configured to bind the intersection points c12 between the first rebars R10 and the second rebars R20 of the rebar group including the plurality of first rebars R10 of which the extension direction is the first direction (Y-direction) and the plurality of second rebars R20 of which the extension direction is the second direction (X-direction) intersecting the first direction (Y-direction) and arranged so as to intersect with the first rebars R10, the traveling unit 121 configured to be able to travel on the first rebar R10 and/or the second rebar R20, the first sensor 130a and the second sensor 130b configured to detect at least one first rebar R10 and/or at least one second rebar R20 and arranged at a distance from each other along the third direction (Y-direction), and the third sensor 130c and the fourth sensor 130d configured to detect at least one first rebar R10 and/or at least one second rebar R20 and arranged at a distance from each other along the fourth direction (X-direction) that intersects with the third direction (Y-direction). As described above, the rebar binding robot 100 is equipped with four sensors 130 (first sensor 130a, second sensor 130b, third sensor 130c, and fourth sensor 130d), and therefore can efficiently detect, for example, the intersection point c12 of the first rebar R10 and the second rebar R20, as described above. The position of the intersection point c12 can be confirmed, for example, by installing a sensor near the rebar binding unit 110, but since the rebar binding unit 110 is configured to move up and down, it may be difficult to install a sensor in the vicinity. In the embodiment of the present disclosure, the position of the intersection point c12 can be estimated based on the detection results of the four sensors 130, even when no sensor is installed near the rebar binding unit 110.

In addition, the rebar binding robot 100 according to the embodiment of the present disclosure includes, for example, includes the rebar binding unit 110 configured to bind the intersection points c12 between the first rebars R10 and the second rebars R20 of the rebar group including the plurality of first rebars R10 of which the extension direction is the first direction (Y-direction) and the plurality of second rebars R20 of which the extension direction is the second direction (X-direction) that intersects the first direction (Y-direction), the traveling unit 121 configured to be able to travel on the first rebar R10 and/or the second rebar R20, the sensor unit 130 configured to detect the first rebar R10 and/or the second rebar R20, and the movement amount calculation section 174 that calculates the movement amount of the traveling unit 121 based on the position information of the first rebar R10 or the second rebar R20 detected by the sensor unit 130 when the traveling unit 121 moves from the first rebar R10 or the second rebar R20 along which the traveling unit 121 is traveling to another first rebar R10 or another second rebar R20. As described above, the rebar binding robot 100 according to the embodiment of the present disclosure can, for example, determine the position of the rebar to which the rebar binding robot 100 is to move based on the detection results of the sensor unit 130, and calculate the amount of movement of the rebar binding robot 100 based on the position of the rebar along which the traveling unit 121 of the rebar binding robot 100 is traveling and the position of the rebar to which the rebar binding robot 100 is to move. For example, when the rebar binding robot 100 reaches the end of the rebar on which rebar binding work is performed, and then moves to the next rebar on which the rebar binding robot 100 will perform rebar binding work, the amount of movement can be calculated based on the detection results by the sensor unit 130.

In the embodiment of the present disclosure described above, an example is described in which the rebar binding robot 100 performs rebar binding work at the intersection point c12 of the first rebar R10 and the second rebar R20 in the rebar group arranged so that the first rebar R10 and the second rebar R20 are perpendicular to each other, but the rebar binding robot 100 according to the embodiment of the present disclosure may also be used in cases in which the first rebar R10 and the second rebar R20 are in a non-perpendicular relationship.

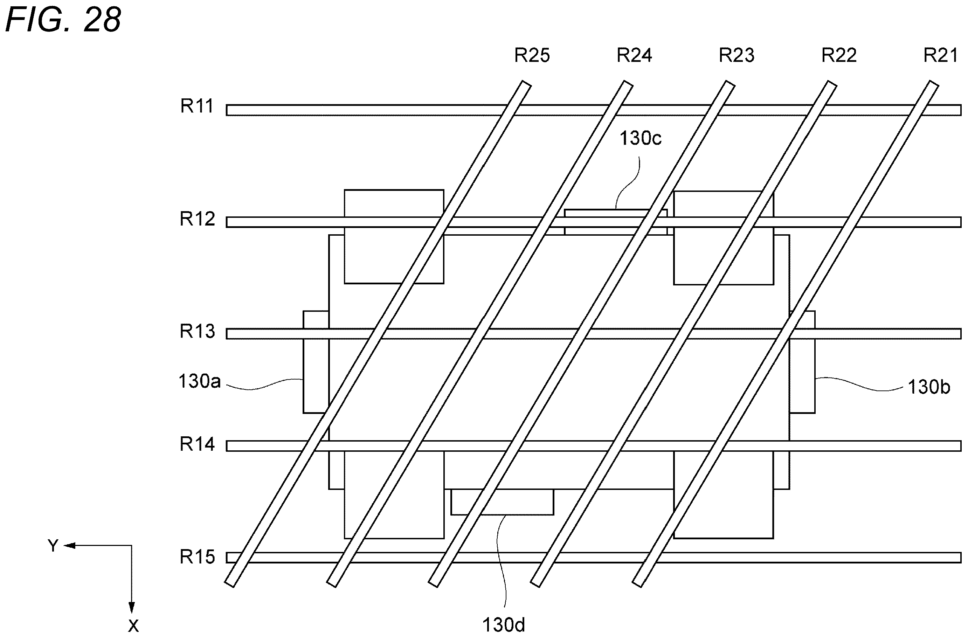

FIG. 28 is a schematic diagram of a rebar binding robot 200 according to another embodiment of the present disclosure, as viewed from below in the Z-direction (-Z-direction). As illustrated in FIG. 28, in the present embodiment, the second rebar R20 is arranged at an angle of approximately 30° relative to the first rebar R10. The rebar binding robot 200 according to the present embodiment differs from the rebar binding robot 100 in the positions of the third sensor 130c and the fourth sensor 130d. The third sensor 130c and the fourth sensor 130d of the rebar binding robot 200 are disposed on a straight line that is inclined at 30° with respect to the X-direction. In the rebar binding robot 200, the third sensor 130c and the fourth sensor 130d are aligned with the second rebar R20 and positioned in a direction inclined from the X-direction, making it possible to detect the second rebar R20 in a similar manner to the rebar binding robot 100.

In this way, the arrangement of the first sensor 130a to the fourth sensor 130d may be changed depending on the arrangement configuration of the first rebar R10 and the second rebar R20. The arrangement of the first sensor 130a, the second sensor 130b, the third sensor 130c, and/or the fourth sensor 130d may be changed manually or automatically before starting the rebar binding work, for example, depending on the construction site where the rebar group R to be the subject of the binding work is located. Alternatively, even after the rebar binding robot 100 has started traveling, the relationship between the first rebar R10 and the second rebar R20 may be determined based on the detection results of the sensor unit 130, and the arrangement of the first sensor 130a, the second sensor 130b, the third sensor 130c, and/or the fourth sensor 130d may be dynamically changed based on the determination results. In this case, for example, a motor or the like capable of driving the first sensor 130a to the fourth sensor 130d may be provided, and the positions of the first sensor 130a to the fourth sensor 130d may be changed by driving the motor.

The present embodiments are described above with reference to specific examples. However, the present disclosure is not limited to these specific examples. Any design modifications to these specific examples made by a person skilled in the art are also included within the scope of the present disclosure as long as they incorporate the features of the present disclosure. The elements of each of the above-described specific examples, as well as their arrangement, conditions, shapes, and the like are not limited to those exemplified, and can be modified as appropriate. The elements of each of the above-described specific examples can be combined in various ways as appropriate, provided no technical contradictions arise.

This application is based on a Japanese patent application filed on January 20, 2023 (Patent Application No. 2023-007172), a Japanese patent application filed on January 20, 2023 (Patent Application No. 2023-007174), a Japanese patent application filed on January 20, 2023 (Patent Application No. 2023-007176), a Japanese patent application filed on January 20, 2023 (Patent Application No. 2023-007177), a Japanese patent application filed on January 20, 2023 (Patent Application No. 2023-007182), a Japanese patent application filed on January 20, 2023 (Patent Application No. 2023-007187), and a Japanese patent application filed on August 10, 2023 (Patent Application No. 2023-131219), the contents of which are incorporated by reference into this application.

### INDUSTRIAL APPLICABILITY

The binding apparatus and system according to the present disclosure are capable of traveling with high positional accuracy without need to perform processing to correct the estimated own position based on the measurement results of a sensor or the like.

### REFERENCE SIGNS LIST

100, 200: rebar binding robot
110: rebar binding unit
120: moving unit
121: traveling unit
121a: first traveling unit
121b: second traveling unit
121c: third traveling unit
121d: fourth traveling unit
130: sensor unit
130a: first sensor
130b: second sensor
130c: third sensor
130d: fourth sensor
140: main body unit
146: lateral movement unit
150: support bar
160: control unit
162: sensor detection result acquisition section
164: determination section
166: intersection point calculation section
168: rebar binding unit control section
170: travel control section
172: stop control section
174: movement amount calculation section
176: posture control section
178: motor control section
184: intersection point map generation section
186: travel route generation section
188: foreign object bypass control section
190: odometry information calculation section
c12: intersection point
cp12: intersection portion
R10: first rebar
R20: second rebar

## Claims

1. A binding apparatus comprising:
a rebar binding unit configured to bind an intersection point of at least two rebars of a plurality of rebars;
a traveling unit configured to be capable of traveling on the plurality of rebars; and
a travel control unit configured to control a traveling of the traveling unit, wherein
the travel control unit is configured to control the traveling of the traveling unit based on a map including a plurality of regions including an estimated position of the intersection point.

2. The binding apparatus according to claim 1, further comprising:
a detection unit configured to detect the intersection point within a predetermined detection range,
wherein the travel control unit is further configured to control the traveling of the traveling unit based on a position of the intersection point detected by the detection unit.

3. The binding apparatus according to claim 2, wherein the travel control unit is configured to further perform a determination in which of the plurality of regions included in the map the position of the intersection point detected by the detection unit is included, and is configured to control the traveling of the traveling unit based on a result of the determination.

4. The binding apparatus according to claim 1, wherein the travel control unit is configured to generate the map based on arrangement information regarding arrangement of the plurality of rebars.

5. The binding apparatus according to claim 4, wherein the arrangement information includes information regarding a pitch of the plurality of rebars and/or information regarding the number of intersection points.

6. The binding apparatus according to claim 1, wherein the travel control unit is configured to control the traveling of the traveling unit so as to pass through each of the plurality of regions included in the map.

7. The binding apparatus according to claim 6, wherein
the travel control unit is configured to
generate a travel route for passing through each of the plurality of regions included in the map, and
control the traveling of the traveling unit based on the travel route.

8. The binding apparatus according to claim 7, further comprising:
an obstacle detection unit configured to detect an obstacle within a predetermined detection range, wherein
the travel control unit is configured to update the generated travel route when a result of obstacle detection by the obstacle detection unit is updated.

9. The binding apparatus according to claim 8, wherein
the obstacle detection unit is configured to detect an angle between a direction of at least one of the plurality of rebars and a direction of the binding apparatus, and
when the obstacle detection unit detects the obstacle, the travel control unit is configured to update the generated travel route based on the angle.

10. The binding apparatus according to claim 8 or 9, wherein
the travel control unit is configured to
identify a region including the obstacle detected by the obstacle detection unit among the plurality of regions, and
update the travel route so as not to include the identified region.

11. The binding apparatus according to claim 10, wherein when the obstacle detected in the identified region is no longer detected by the obstacle detection unit, the travel control unit is configured to update the travel route to include the identified region.

12. A system, comprising:
the binding apparatus according to claim 1; and
a map generation apparatus configured to generate the map based on arrangement information regarding arrangement of the plurality of rebars.

13. The system according to claim 12, wherein the map generation apparatus is configured to generate the arrangement information by detecting the plurality of rebars.
